# EUROPÄISCHE PATENTANMELDUNG

(11) **EP 1 621 247 A1**
(43) Veröffentlichungstag der Anmeldung: **01.02.2006**
(21) Anmeldenummer: 05013934.4
(22) Anmeldetag: 28.06.2005
(51) Int. Cl.: B01J 8/06, B01J 19/00

(54) **Durchführung von exothermen Gasphasenreaktionen**

(30) Priorität: 30.07.2004 DE 102004037154
(71) Anmelder: MAN DWE GmbH, 94469 Deggendorf (DE)
(72) Erfinder: Dachs, Josef, Dr., 94469 Deggendorf (DE); Schuster, Wolfgang, Dr., 94554 Moos (DE); Bank, Rolf, Dr., 94469 Deggendorf (DE); Lehr, Manfred, 94469 Deggendorf (DE)
(74) Vertreter: Paustian, Othmar

(57) **Zusammenfassung**

Bei einem Verfahren zum Betreiben eines Rohrbündelreaktors für exotherme Gasphasenreaktionen, der ein Rohrbündel mit katalysatorgefüllten Reaktionsrohren (2) aufweist, deren eine Enden von einer Gaseintrittshaube und deren andere Enden von einer Gasaustrittshaube überspannt und die zur Abführung der Reaktionswärme an der Außenseite von einem Wärmeträger umströmt werden, wobei ein explosionsfähiges Gasgemisch (G) über die Gaseintrittshaube in die Reaktionsrohre (2) eingeleitet und nach der Reaktion das gegebenenfalls immer noch explosionsfähige Gasgemisch (G) über die Gasaustrittshaube aus diesen abgeleitet wird, wird eine Grenztemperatur in den Reaktionsrohren (2) vorgegeben, die über den normalen Betriebstemperaturen der Reaktionsrohre (2) liegt, aber höchstens gleich der Entzündungstemperatur des explosionsfähigen Gasgemisches (G) ist und ein in Reaktionsrohren (2) sich jeweils ausbildender nicht betriebsmäßiger Hochtemperaturbereich (7), dessen Temperatur mindestens gleich der Grenztemperatur ist und der in dem jeweiligen Reaktionsrohr (2) in dessen Längsrichtung wandert, noch im Reaktionsrohr (2) gestoppt, so daß ein Durchschlagen des Hochtemperaturbereichs (7) in die Gaseintritts- bzw. die Gasaustrittshaube verhindert wird. Ferner werden noch Vorrichtungen, Reaktionsrohre und Rohrbündelreaktoren zur Durchführung des Verfahrens vorgeschlagen.

## Beschreibung

Die Erfindung bezieht sich auf ein Verfahren zum Betreiben eines Rohrbündelreaktors für exotherme Gasphasenreaktionen, der ein Rohrbündel mit katalysatorgefüllten Reaktionsrohren aufweist, deren eine Enden von einer Gaseintrittshaube und deren andere Enden von einer Gasaustrittshaube überspannt und die zur Abführung der Reaktionswärme an der Außenseite von einem Wärmeüberträger umströmt werden, mit den folgenden Schritten: Ein explosionsfähiges Gasgemisch wird über die Gaseintrittshaube in die Reaktionsrohre eingeleitet, und nach der Reaktion wird das gegebenenfalls immer noch explosionsfähige Gasgemisch über die Gasaustrittshaube aus diesen abgeleitet. Die Erfindung bezieht sich auch auf Vorrichtungen und Reaktionsrohre für solche Rohrbündelreaktoren und auf diese selbst.

Solche Rohrbündelreaktoren sind z. B. aus US 3,850,232 oder WO 2004/052524 A1 bekannt. Die Reaktionsrohre verlaufen im allgemeinen vertikal und enthalten einen im wesentlichen partikelförmigen Katalysator, der von dem Reaktionsgasgemisch durchströmt wird. Diese ortsfeste Anordnung des Katalysators in dem Reaktionsrohrbündel wird als Festbett bezeichnet. Die bei exothermen Gasphasenreaktionen entstehende Reaktionswärme muß mittels Wärmeaustausch abgeführt werden. Dieser Wärmeaustausch erfolgt einerseits noch innerhalb des Festbetts in dem im Festbett reagierenden Prozeßgasgemisch selbst und andererseits zwischen dem Festbett und einem separaten Wärmeträger. Dazu werden die Reaktionsrohre zwischen zwei Rohrböden, in denen die Enden der Reaktionsrohre an ihrem Außenumfang jeweils gasdicht befestigt sind, innerhalb eines das Rohrbündel umgebenden Reaktormantels von dem Wärmeträger umspült. Der Wärmeträger wird meist über Ringkanäle durch Mantelfenster gleichmäßig über den Umfang des Mantelraums bzw. des Rohrbündels verteilt.

Die Stromführung von Reaktionsgasgemisch und Wärmeträger ist nicht eingeschränkt. So können das Reaktionsgas und der Wärmeträger von oben nach unten oder von unten nach oben durch den Rohrbündelreaktor geführt werden, und zwar entweder beide in der gleichen Strömungsrichtung - d. h. im Gleichstrom - oder in entgegengesetzten Strömungsrichtungen - d. h. im Gegenstrom - oder als Kombination davon, wenn mehrere Ringkanäle vorgesehen werden. Der Wärmeträger - häufig ein Salzbad - wird mittels einer Umwälzpumpe umgewälzt und von einem Wärmetauscher je nach Art des Reaktionsprozesses erwärmt bzw. gekühlt.

Bei exothermen Gasphasenreaktionen bilden sich in den Reaktionsrohren häufig ein oder auch mehrere Bereiche mit erhöhter Temperatur aus, die als Heißpunkt oder auch als "hot spot" bezeichnet werden. An diesen Heißpunkten läuft die chemische Reaktion besonders heftig ab und es wird dementsprechend eine erhöhte Reaktionswärme erzeugt.

Aus wirtschaftlichen Gründen ist man andererseits bestrebt, für die gewünschte Reaktion möglichst hohe Konzentrationen der Reaktanten in dem Reaktionsgasgemisch einzustellen, was bewirken kann, daß dessen Zusammensetzung die untere Explosionsgrenze überschreitet oder die obere Explosionsgrenze unterschreitet und ein explosionsfähiges Gasgemisch den Reaktionsrohren zugeführt wird. Da bei den gewünschten Reaktionen meist nur eine teilweise Umsetzung der Reaktanten stattfindet, ist auch häufig das austretende Gasgemisch noch explosionsfähig.

Unter solchen Betriebsbedingungen sind in der Praxis immer wieder Explosionen in den an die Reaktionsrohre angrenzenden Gasräumen zu beobachten, d. h. in der Gaseintritts- und/oder in der Gasaustrittshaube. Von dort aus kann sich die Explosion bzw. die daraus entstehende Flammenfront in die anschließenden Rohrleitungen hinein ausbreiten. Diese Explosionen werden nach allgemeiner Meinung der Fachwelt durch in den Gasräumen befindliche Zündquellen ausgelöst.

Es sind zahlreiche Vorrichtungen zum Unterdrücken der Ausbreitung von freien Flammen in Gasräumen bzw. Rohrleitungen - sogenannte Flammensperren - bekannt.

Zu solchen Vorrichtungen gehören statisch-trockene Flammensperren wie sie z. B. in DE 101 12 957 oder in EP 0 649 327 beschrieben sind. Hierbei handelt es sich um Elemente, bei denen der Effekt ausgenutzt wird, daß sich Flammen in engen Spalten bei Einhaltung entsprechender Grenzabmessungen nicht mehr ausbreiten können und somit zum Erlöschen gebracht werden. Dies geschieht in der Regel durch einen intensiven Kontakt der Flamme mit kühlenden Wänden, z. B. mittels Führen der Flamme durch enge Spalte hindurch. Solche Flammensperren können als engmaschige Siebe, Plattensicherungen, Sintermetalle, Kugelschüttungen oder als Bandsicherungen aus profiliertem aufgewickeltem Band ausgeführt werden. Diese bekannten Flammensperren mit engen Spalten können eine schnelle Flamme oder Explosionswand innerhalb kurzer Zeit durch Wärmeabtransport mit einer großen Wärmeübertragungsfläche löschen.

Weiterhin sind Flammensperren bekannt, z. B. aus DE 198 37 146, EP 0 131 782, DE 295 11 991, DE 296 06 948 oder DE 199 12 326, bei denen das Schmelzen eines Lotes einen unter Federspannung stehenden Verschluß bzw. Absperrkörper auslöst. Diese Flammensperren sind meistens als fertige Module mit Schraub- oder Flanschverbindung ausgebildet und werden in der Regel in einzelne Rohrleitungen zwischengeschaltet, die dem Gastransport dienen. Diese Flammensperren sollen im Falle einer unzulässigen Erwärmung der Rohrleitung, die beispielsweise aus einem Brand innerhalb oder außerhalb der Rohrleitung entstehen kann, den Gasstrom durch die Rohrleitung unterbinden. Eingesetzt werden solche Flammensperren z. B. in Sicherheitsarmaturen von Gasversorgungsanlagen.

Nachteilig bei all diesen bekannten Flammensperren ist, daß ihr Wirksamwerden den Rohrbündelreaktor vollständig außer Betrieb setzt. Diese Ausfallzeiten und die Wiederinbetriebnahme des Reaktors verursachen hohe Kosten. Darüber hinaus können durch die Explosionen Personen gefährdet und benachbarte Gegenstände beschädigt werden.

Dementsprechend liegt die Aufgabe der Erfindung darin, bei einem Rohrbündelreaktor für exotherme Gasphasenreaktionen Entzündungen eines explosionsfähigen Gasgemisches möglichst zu verhindern bzw. deren Häufigkeit zu reduzieren.

Erfindungsgemäß wird diese Aufgabe bei einem Verfahren der eingangs genannten Art durch folgende Schritte gelöst:
eine Grenztemperatur in den Reaktionsrohren wird vorgegeben, die über den normalen Betriebstemperaturen der Reaktionsrohre liegt, aber höchstens gleich der Entzündungstemperatur des explosionsfähigen Gasgemisches ist; und
ein in Reaktionsrohren sich jeweils ausbildender nicht betriebsmäßiger Hochtemperaturbereich, dessen Temperatur mindestens gleich der Grenztemperatur ist und der in dem jeweiligen Reaktionsrohr in dessen Längsrichtung wandert, wird noch im Reaktionsrohr gestoppt, so daß ein Durchschlagen des Hochtemperaturbereichs in die Gaseintritts- bzw. in die Gasaustrittshaube verhindert wird.

Gemäß der Erfindung wird die Aufgabe auch durch eine Vorrichtung gemäß Anspruch 10 sowie durch Reaktionsrohre gemäß den Ansprüchen 32 und 34 sowie durch einen Rohrbündelreaktor gemäß Anspruch 35 gelöst.

Anspruch 36 gibt Verwendungsmöglichkeiten für einen erfindungsgemäßen Rohrbündelreaktor an.

Die Unteransprüche geben jeweils vorteilhafte Ausgestaltungsmöglichkeiten an.

Der Erfindung liegt die Erkenntnis zugrunde, daß entgegen der in der Fachwelt herrschenden Meinung, gemäß der insbesondere bei Maleinsäureanhydrid-Reaktoren eine Zündung aus den Reaktionsrohren heraus als sehr unwahrscheinlich gesehen wird, unter bestimmten Bedingungen ein nicht betriebsmäßiger Hochtemperaturbereich bzw. Heißpunkt in den Reaktionsrohren an die Ränder der Festbettschüttung wandern kann und dann dort die Zündquelle für die angrenzenden Gasräume ist. Dies hat die Anmelderin in neueren Versuchen überraschenderweise festgestellt. Dabei wurde beobachtet, daß der Heißpunkt sowohl entgegen der Strömungsrichtung des Reaktionsgases zur Gaseintrittshaube hin wandern kann, als auch mit der Strömungsrichtung zur Gasaustrittshaube hin. Weiterhin wurde beobachtet, daß dieser Effekt erst ab einer bestimmten Konzentration der Reaktanten abhängig von den Betriebsbedingungen auftritt und mit darüber steigender Konzentration immer ausgeprägter wird.

Der Ausdruck "nicht betriebsmäßig" soll deutlich machen, daß sich die Hochtemperaturbereiche nur zufällig und nur in einzelnen Reaktionsrohren ausbilden und nicht Teil des planmäßigen Betriebs eines Rohrbündelreaktors sind.

Die für das Wandern eines Heißpunktes notwendigen Bedingungen entsprechen in der Regel nicht den regulären Reaktionsbedingungen in einem Rohrbündelreaktor. Bei Reaktoren mit einer großen Anzahl von Reaktionsrohren - moderne Rohrbündelreaktoren können bis zu 30000 Reaktionsrohre und mehr haben - kann es jedoch vorkommen, daß in einzelnen Reaktionsrohren nicht optimale Reaktionsbedingungen herrschen. Mögliche Ursachen hierfür sind z. B. lokale Überaktivität des Katalysators, teilweise verstopfte Reaktionsrohre durch Katalysatorstaub oder Fremdpartikel mit der Folge eines verminderten Durchsatzes, lokal erhöhte Konzentrationen aus ungenügender Gasgemischaufbereitung oder lokal erhöhte Wärmeträgertemperaturen. Einer oder eine Kombination mehrerer dieser Effekte kann dazu führen, daß die Reaktion in einzelnen Reaktionsrohren außer Kontrolle gerät, dadurch die Temperatur in dem betreffenden Reaktionsrohr am Heißpunkt stark ansteigt und dieser Heißpunkt zu wandern beginnt. Erreicht der Heißpunkt den Anfang oder das Ende der Festbettschüttung im Reaktionsrohr, so besteht die Gefahr, daß dieser das dort angrenzende explosionsfähige Gasgemisch entzündet und zur Explosion bringt.

Die Entzündungstemperatur entspricht nicht der theoretischen Zündtemperatur eines ruhenden Gases bzw. Gasgemisches, sondern bezieht sich auf das strömende Gasgemisch in der Gaseintritts- bzw. Gasaustrittshaube.

Dieser Effekt spielt eine um so größere Rolle, je näher das Gasgemisch an der stöchiometrischen Zusammensetzung liegt. Prozesse, die bekanntermaßen zumindest teilweise im Explosionsbereich betrieben werden und somit für den oben beschriebenen Effekt kritisch sein könnten, sind beispielsweise die Herstellung von Maleinsäureanhydrid, Phthalsäureanhydrid, (Meth)acrolein, (Meth)acrylsäure, Methyl(meth)acrylat und Acrylnitril sowie Essigsäure.

Mit den erfindungsgemäßen Maßnahmen wird ein nicht betriebsmäßiges Wandern eines Hochtemperaturbereiches einer stark exothermen Gasphasenreaktion innerhalb des Reaktionsrohrs unterbunden, bevor er ein explosionsfähiges Gasgemisch erreicht und entzündet. Eine Explosion des Gasgemisches in der Gaseintritts- und/oder in der Gasaustrittshaube wird also verhindert, indem eine in einem Reaktionsrohr (oder in mehreren Reaktionsrohren) sich jeweils ausbildene potentielle Zündquelle innerhalb des betreffenden Reaktionsrohrs in einem ausreichenden Abstand zum explosionsfähigen Gasgemisch unschädlich gemacht wird. Somit wird allenfalls das jeweils betreffende Reaktionsrohr außer Betrieb gesetzt, jedoch nicht der gesamte Rohrbündelreaktor. Dadurch wird die Sicherheit von Personen und Sachen gesteigert und gleichzeitig die Verfügbarkeit der Produktionsanlage erhöht, insbesondere bei hohen Konzentrationen der Reaktanten. Die erfindungsgemäßen Maßnahmen können mit relativ geringem technischen Aufwand realisiert werden und verhindern daher die Entzündung eines explosionsfähigen Gasgemisches in der Gaseintritts- oder Gasaustrittshaube eines Rohrbündelreaktors für exotherme Gasphasenreaktionen auf äußerst wirtschaftliche Weise.

Die aus dem Stand der Technik bekannten, weiter oben beschriebenen Flammensperren sind für die erfindungsgemäßen Maßnahmen weder ausgelegt noch geeignet.

Bei einem in einem Reaktionsrohr in dessen Längsrichtung wandernden Hochtemperaturbereich handelt es sich um keine freie Flamme, sondern um eine heiße Stelle - Heißpunkt - in der Partikelschüttung. Das Wandern des Hochtemperaturbereiches in einem Reaktionsrohr entlang der Rohrachse erfolgt verglichen mit der Ausbreitungsgeschwindigkeit einer Flammenfront wesentlich langsamer. Die weiter oben beschriebenen, aus dem Stand der Technik bekannten statisch-trockenen Flammensperren, bei denen die Flammen in engen Spalten zum Erlöschen gebracht werden, würden sich durch den langsam wandernden Hochtemperaturbereich stetig aufheizen und die Aufgabe, die Reaktionswärme aufzunehmen, letztendlich nicht mehr erfüllen können. Daher würde der Hochtemperaturbereich durch derartige Flammensperren hindurchwandern.

Auch die ebenfalls weiter oben beschriebenen, bekannten Vorrichtungen, die einen unter Federspannung stehenden Verschluß aufweisen, sind nicht für den Einbau in das Innere eines Rohres ausgebildet, sondern zum Zwischenschalten zwischen zwei Rohrenden. Zudem würden bei direkt in die Schüttung eingebauten bekannten Vorrichtungen die Partikel die Schließbewegung behindern. Andererseits kann ein Einbau dieser bekannten Vorrichtungen in einen partikelfreien Raum in der Schüttung keine ausreichende Sicherheit gegen ein Durchschlagen des Hochtemperaturbereiches gewährleisten, da dann die Reaktionszeiten zu lang sind.

Sämtliche erfindungsgemäßen Vorrichtungen sind relativ einfach aufgebaut, funktionieren zuverlässig und sind schnell montierbar und daher sehr kostengünstig. Sie sind dazu ausgelegt, in die Reaktionsrohre eingesetzt zu werden, wobei sie dort vollständig oder teilweise in die Katalysatorschüttung eingebettet sind oder an diese angrenzen. Die Reaktionsrohre können gegebenenfalls auch teilweise mit inerten Partikeln gefüllt sein. Zum Stoppen des Hochtemperaturbereiches weisen erfindungsgemäße Vorrichtungen einen Durchströmungsquerschnitt auf, dessen Größe in Abhängigkeit von der vorgegebenen Grenztemperatur bemessen ist und in bevorzugten Ausführungsformen bei Erreichen der Grenztemperatur auch auf Null reduzierbar ist, so daß das betreffende Reaktionsrohr dann verschlossen ist. Durch die Reduzierung des Durchströmungsquerschnittes wird die Strömungsgeschwindigkeit erhöht und die Weiterbewegung des Hochtemperaturbereiches dadurch unterbunden, daß er "zurückgeblasen" wird. Durch Verschließen des einen Hochtemperaturbereich enthaltenden Reaktionsrohrs wird die Durchströmung des betreffenden Reaktionsrohres vollständig unterbunden und auf diese Weise der Hochtemperaturbereich gelöscht.

In einer alternativen Ausführungsform der Erfindung werden zum Stoppen des Hochtemperaturbereichs die Reaktionsbedingungen in dem betreffenden Reaktionsrohr bei Erreichen der Grenztemperatur verändert, um den Hochtemperaturbereich zu löschen. Hierfür können beispielsweise die Reaktionsrohre mit einer Füllung gefüllt werden, die Flüssigkeiten und/oder Feststoffe enthält, die bei Erreichen der Grenztemperatur verdampfen und den Gasstrom inertisieren und/oder zusätzlich kühlen.

Die Erfindung wird nachfolgend anhand der Zeichnungen beispielshalber noch näher erläutert. Es zeigen:
- Figur 1a: einen Längsschnitt durch eine erste Ausführungsform einer erfindungsgemäßen Vorrichtung, längs Linie Ia-Ia in Figur 1b, eingebaut in ein Reaktionsrohr;
- Figur 1b: eine Draufsicht auf die Ausführungsform aus Figur 1a;
- Figur 2a: einen Längsschnitt durch eine zweite Ausführungsform einer erfindungsgemäßen Vorrichtung, längs Linie IIa-IIa in Figur 2b, eingebaut in ein Reaktionsrohr;
- Figur 2b: eine Draufsicht auf die Ausführungsform aus Figur 2a;
- Figur 3: einen Längsschnitt durch eine dritte Ausführungsform einer erfindungsgemäßen Vorrichtung, eingebaut in ein Reaktionsrohr;
- Figur 4: einen Längsschnitt durch eine vierte Ausführungsform einer erfindungsgemäßen Vorrichtung, eingebaut in ein Reaktionsrohr;
- Figur 5a: einen Längsschnitt durch eine fünfte Ausführungsform einer erfindungsgemäßen Vorrichtung, längs Linie Va-Va in Figur 5b, eingebaut in ein Reaktions- rohr;
- Figur 5b: eine Draufsicht auf die Ausführungsform aus Figur 5a, längs Linie Vb-Vb in Figur 5a;
- Figur 6: einen Längsschnitt durch eine sechste Ausführungsform einer erfindungsgemäßen Vorrichtung, eingebaut in ein Reaktionsrohr;
- Figur 7: einen Längsschnitt durch eine siebte Ausführungsform einer erfindungsgemäßen Vorrichtung, eingebaut in ein Reaktionsrohr;
- Figur 8: einen Längsschnitt durch eine achte Ausführungsform einer erfindungsgemäßen Vorrichtung, eingebaut in ein Reaktionsrohr;
- Figur 9a: einen Längsschnitt durch eine neunte Ausführungsform einer erfindungsgemäßen Vorrichtung, eingebaut in ein Reaktionsrohr, wobei das Reaktionsgasgemisch von oben nach unten strömt;
- Figur 9b: einen Längsschnitt durch eine Abwandlung der neunten Ausführungsform aus Figur 9a, eingebaut in ein Reaktionsrohr, wobei das Reaktionsgasgemisch von unten nach oben strömt;
- Figur 10: einen Längsschnitt durch eine zehnte Ausführungsform einer erfindungsgemäßen Vorrichtung, eingebaut in ein Reaktionsrohr;
- Figur 11a: einen Längsschnitt durch eine elfte Ausführungsform einer erfindungsgemäßen Vorrichtung, eingebaut in ein Reaktionsrohr;
- Figur 11b: einen Querschnitt längs Linie XIb-XIb in Figur 11a;
- Figur 12a: einen Längsschnitt durch eine zwölfte Ausführungsform einer erfindungsgemäßen Vorrichtung, längs Linie XIIa-XIIa in Figur 12b, mit innerem Verdrängerkörper, eingebaut in ein Reaktionsrohr; und
- Figur 12b: einen Querschnitt längs Linie XIIb-XIIb in Figur 12a.

Die in den Figuren dargestellten Ausführungsbeispiele erfindungsgemäßer Vorrichtungen 1 sind jeweils in ihrem in ein Reaktionsrohr 2 eingesetzten Zustand dargestellt.

Die Reaktionsrohre 2 sind mit Katalysatorpartikeln 4 oder gegebenenfalls auch teilweise mit inerten Partikeln 5 gefüllt. Diese Füllung wird auch als Schüttung 6 bezeichnet.

Ein Hochtemperaturbereich 7, der sich in der Schüttung 6 ausgebildet hat, ist in den Figuren als fett gezeichnete Schraffur dargestellt. Dieser Hochtemperaturbereich 7 wandert in Richtung der vier Pfeile H auf die erfindungsgemäße Vorrichtung 1 zu. Die Strömungsrichtung des Gasgemisches G ist durch Pfeil G dargestellt.

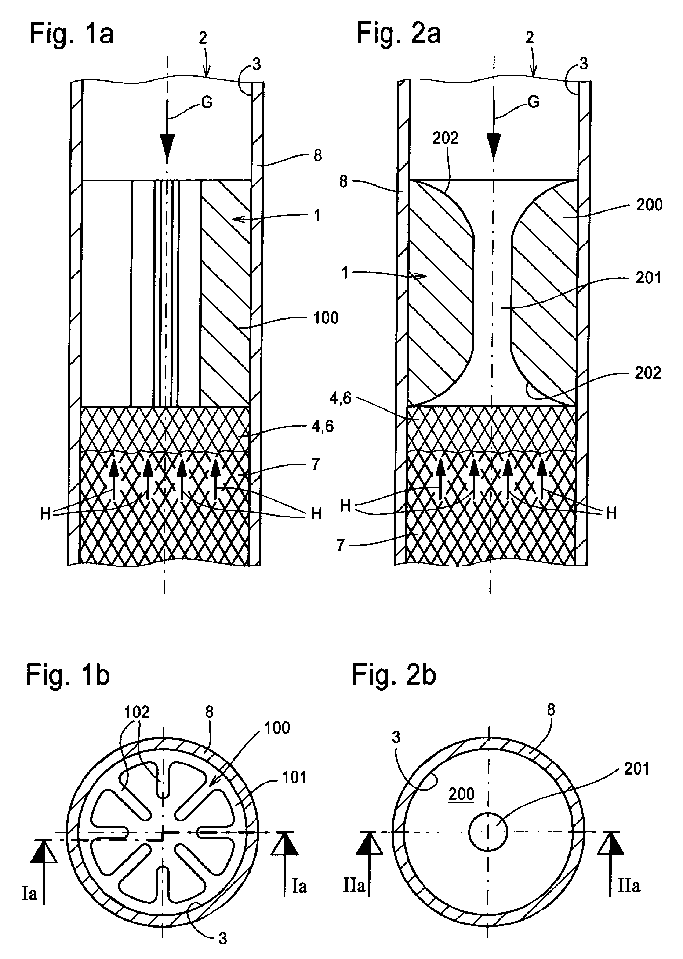

In den Figuren 1a, 1b, 2a, 2b, 12a und 12b sind Ausführungsformen 100, 200, 1200 erfindungsgemäßer Vorrichtungen 1 dargestellt, die den Durchströmungsquerschnitt soweit reduzieren und damit die Durchströmungsgeschwindigkeit des Gasgemisches G soweit erhöhen, daß ein Weiterwandern des Hochtemperaturbereiches 7 durch die Vorrichtung bzw. den Einsatz hindurch verhindert ist; der Hochtemperaturbereich bzw. Heißpunkt 7 wird sozusagen in das Reaktionsrohr 2 "zurückgeblasen" und dadurch zum Stehen gebracht.

Solche Ausführungsformen 100, 200, 1200 sind geeignet, einen gegen die Strömungsrichtung des Reaktionsgasgemisches G wandernden Heißpunkt 7 an der Weiterbewegung zu hindern. Der Einbau kann auch in den unteren Teil des Reaktionsrohres 2 erfolgen.

Die äußere Formgebung der Einsätze 100, 200, 1200 ist dem Hohlquerschnitt der Reaktionsrohre 2 angepaßt. Bei zylindrischen Reaktionsrohren - wie in den dargestellten Ausführungsbeispielen - sind daher auch die Einsätze zylindrisch.

Die Ausführungsform 100 gemäß den Figuren 1a und 1b weist eine an der Reaktionsrohrinnenwand 3 anliegende Hülse 101 und von dieser radial nach innen verlaufende Kühlrippen 102 auf. Diese Kühlrippen bewirken eine verstärkte Wärmeableitung an die gekühlte Reaktionsrohrwand 8. Der Einsatz 100 ist aus einem gut wärmeübertragenden Material hergestellt, um eine möglichst große Wärmeableitung zu ermöglichen. Der Hochtemperaturbereich 7 wird auf diese Weise zusätzlich gekühlt, was dabei hilft, den Hochtemperaturbereich 7 zum Stehen zu bringen.

Gemäß der in den Figuren 2a und 2b dargestellten Ausführungsform 200 weist der Einsatz einen Vollquerschnitt mit einer mittigen Bohrung 201 auf. Der Durchmesser der Bohrung 201, d. h. des Durchströmungsquerschnitts, wird anhand der vorgegebenen Grenztemperatur festgelegt, um die Durchströmungsgeschwindigkeit zu erzielen, die für das Aufhalten des Hochtemperaturbereichs 7 erforderlich ist. Etwaige höchstzulässige Druckverluste müssen bei der Auslegung des Einsatzes 200 beachtet werden. Zur Minimierung der Ein- und Austrittsdruckverluste weitet sich die Bohrung 201 an ihren beiden Enden 202 konisch oder trompetenartig, bevorzugt in einer Venturiform, auf.

Die Ausführungsformen 100, 200 gemäß den Figuren 1a, 1b und 2a, 2b können kostengünstig z. B. als Gußteil hergestellt sein und einfach in das Reaktionsrohr 2 hineingleiten. Durch eine längsgeschlitzte Ausbildung der Vorrichtung - ähnlich einer Spannhülse - kann ein guter Kontakt zur Reaktionsrohrinnenwand 3 erreicht werden.

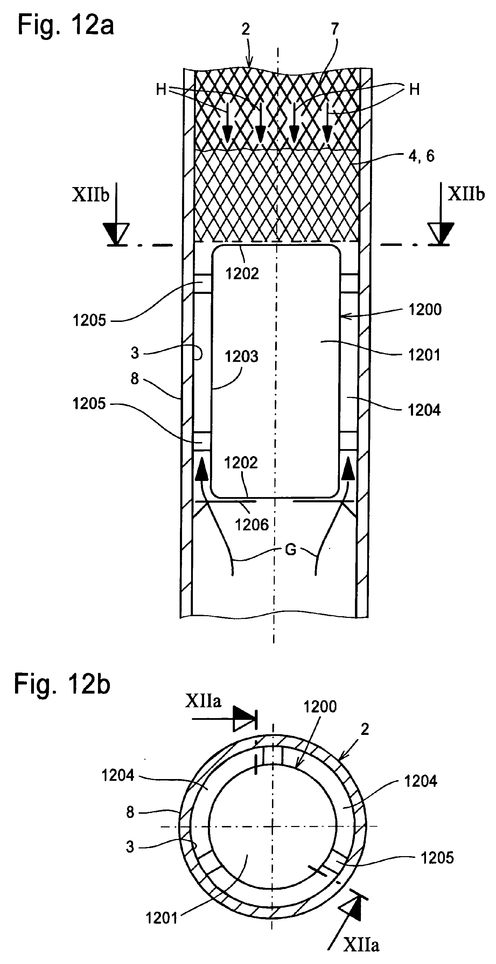

Die Figuren 12a und 12b zeigen eine Variante der Ausführungsform nach Figur 2a und 2b.

Die Ausführungsform bzw. die Vorrichtung 1200 gemäß den Figuren 12a, 12b weist einen Verdrängerkörper 1201 auf, der im dargestellten Ausführungsbeispiel zylinderförmig ausgebildet ist. Auch bei dieser Ausführungsform 1200 verengt der Verdrängerkörper 1201 den Durchströmungsquerschnitt des Reaktionsrohrs 2, wobei sich hier jedoch der Verdrängerkörper 1201 zentral im Reaktionsrohr 2 befindet und die Gasströmung G nach außen an die Innenwand 3 des Reaktionsrohrs 2 lenkt.

Der Verdrängerkörper 1201 kann als gasdichter Vollquerschnitt aus einem schlecht wärmeleitenden Material gebildet sein, z. B. aus Keramik. Er kann jedoch ebensogut als Hohlkörper aus Metall mit dünner Wandung ausgebildet sein.

Der Außendurchmesser des Verdrängerkörpers 1201 ist um ein vorgegebenes Maß kleiner als der Innendurchmesser des Reaktionsrohrs 2, so dass im in ein Reaktionsrohr 2 eingebauten Zustand der Vorrichtung bzw. des Einsatzes 1200 zwischen der Außenseite der zylindrischen Umfangswand 1203 des Verdrängerkörpers 1201 und der Innenwand 3 des Reaktionsrohrs 2 ein Ringspalt 1204 vorgegebener Größe vorhanden ist. Der Ringspalt erstreckt sich längs der gesamten axialen Länge des Verdrängerkörpers 1201 und um den gesamten Umfang herum.

Der Durchströmungsquerschnitt ist durch den Ringspalt 1204 auf ein vorgegebenes Maß verengt, was eine entsprechende Erhöhung der Durchströmungsgeschwindigkeit bewirkt. Die Weite des Ringspaltes 1204 wird anhand der vorgegebenen Grenztemperatur festgelegt, um die erhöhte Durchströmungsgeschwindigkeit zu erzielen, die für das Aufhalten des Hochtemperaturbereichs 7 erforderlich ist. Dadurch erhöht sich auch die Turbulenz in der Gasströmung G und in Folge dessen der Wärmeübergang zur gekühlten Reaktionsrohrwand 8. Im Vergleich zu der in den Figuren 2a und 2b dargestellten Ausführungsform ergibt sich noch zusätzlich der Effekt einer stark vergrößerten Wärmeaustauschfläche, die direkt durch die gekühlte Innenwand 3 des Reaktionsrohrs 2 gebildet ist.

Der Verdrängerkörper 1201 ist durch Abstandshalter 1205 gegen die Innenwand 3 des Reaktionsrohrs 2 abgestützt. Ist er im unteren Endbereich des Reaktionsrohrs 2 angeordnet, so liegt er entweder mit einer Stirnseite 1202 direkt auf einer Katalysatorhalterung 1206 auf, wie in Figur 12a dargestellt, oder er ist in der Schüttung 6 aus Katalysatorpartikeln 4 eingebettet. Ist der Verdrängerkörper 1201 im oberen Endbereich eines Reaktionsrohrs 2 angeordnet, so kann er direkt auf der Katalysatorschüttung 6 aufsetzen oder je nach durchzuführendem Prozess in die Katalysatorschüttung 6 eingebettet sein.

In den dargestellten Beispielen grenzen die Einsätze 100, 200, 1200 an die Katalysatorfüllung 4 an. Zusätzlich können sie in (in den Figuren nicht dargestelltes) Inertmaterial eingebettet sein.

Bei den nachfolgend beschriebenen Ausführungsformen löst der Hochtemperaturbereich bzw. Heißpunkt 7 eine Aktion in den erfindungsgemäßen Vorrichtungen bzw. Einsätzen 1 aus, die zum Verlöschen des Heißpunktes 7 führt.

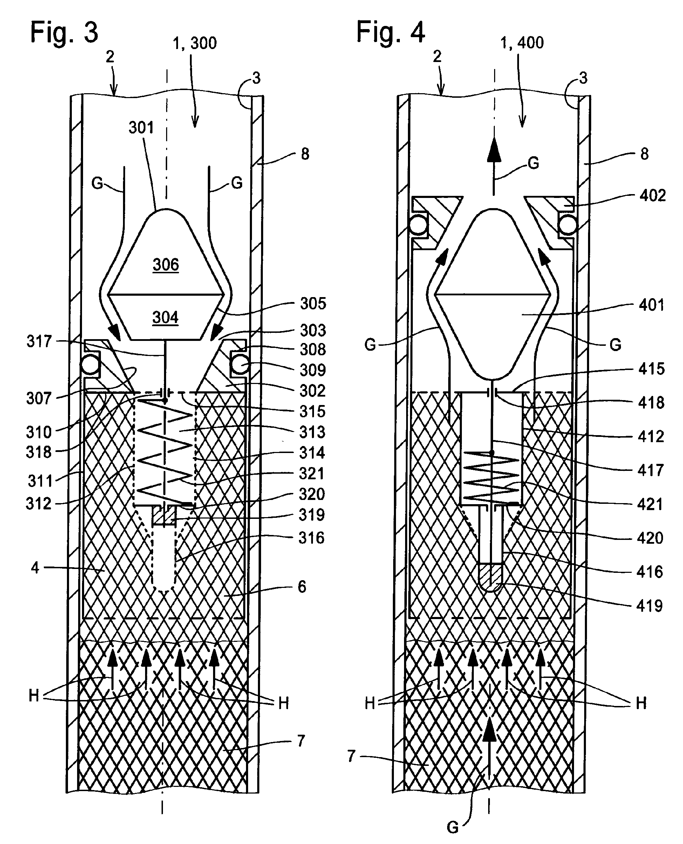

Die in den Figuren 3 bis 7 dargestellten Ausführungsbeispiele einer erfindungsgemäßen Vorrichtung 1 weisen mechanisch bewegbare Teile mit einem Auslösemechanismus auf, wobei nach dem Auslösen die mechanisch bewegbaren Teile durch Schwerkraft oder durch Federkraft das Reaktionsrohr 2 verschließen.

Das Unterbinden des Gasstroms G durch ein Reaktionsrohr 2 hindurch erfolgt durch einen Verschluß des betreffenden Reaktionsrohrs 2 mittels mechanisch bewegter Teile mit Unterstützung durch Schwerkraft oder eine oder mehrere Federn. Der Schließmechanismus wird durch die Erwärmung der Vorrichtung 1 ausgelöst. Daher ist es wesentlich, daß der Teil der Vorrichtung, der durch Erwärmung den Schließvorgang auslöst, in die Schüttung 6 eingebettet ist, während der Bewegungsraum bewegbarer Teile frei von Partikeln ist. Dabei kann jeder Effekt genutzt werden, der durch Erwärmung hervorgerufen wird, wie beispielsweise das Abschmelzen von Material, die Formgedächtniseigenschaften von Materialien, der Bimetalleffekt und/oder die Wärmeausdehnung.

Die in Figur 3 gezeigte Vorrichtung 300 weist einen Absperrkörper 301 und einen Absperrsitz 302 auf, die im Ausgangszustand - d. h. bis zum Erreichen der Grenztemperatur - in einem vorgegebenen Abstand in Achsrichtung zueinander angeordnet sind. Dieser Abstand ist so vorgegeben, daß er ein ungehindertes Hindurchströmen des Reaktionsgasgemisches G durch den Zwischenraum 303 zwischen Absperrkörper 301 und Absperrsitz 302 ermöglicht.

Der Absperrkörper 301 weist einen dem Absperrsitz 302 zugewandten kegelstumpfförmigen bzw. konischen Abschnitt 304, dessen Außenfläche eine Dichtfläche 305 ausbildet, und einen dem Absperrsitz 302 abgewandten kegelförmigen Abschnitt 306 auf, der ein möglichst störungsfreies Vorbeiströmen des Reaktionsgasgemisches G ermöglicht.

Der Absperrsitz ist als Zylinderring 302 ausgebildet, dessen radial innere Wandung 307 konisch verläuft und eine Sitzfläche für die Dichtfläche 305 des Absperrkörpers 301 bildet.

Die Sitzfläche 307 des Absperrsitzes 302 und die Dichtfläche 305 des Absperrkörpers 301 sind so ausgebildet, daß sie bei Anlage aneinander einen gasdichten Verschluß ausbilden.

Der Außendurchmesser des Absperrsitzes 302 ist nur etwas kleiner als der Innendurchmesser des Reaktionsrohrs 2. Am Außenumfang des Absperrsitzes 302 ist eine Ringnut 308 oder ein gleichwertiger umlaufender Sitz ausgebildet, in der bzw. in dem ein Dichtring 309 aufgenommen ist, der gasdicht sowohl an dem Nutgrund 301 bzw. in dem Sitz als auch an der Innenwand 3 des Reaktionsrohrs 2 anliegt.

Von dem radialen Außenrand der dem Absperrkörper 301 abgewandten Stirnfläche 310 des Absperrsitzes 302 aus erstreckt sich eine zylindrische Außenhülse 311, deren Außenfläche an der Reaktionsrohrinnenwand 3 anliegt.

Von dem radialen Innenrand dieser Stirnfläche 310 des Absperrsitzes 302 aus erstreckt sich eine perforierte Schutzhülse 312 konzentrisch in die Außenhülse 311 hinein. Zwischen der Schutzhülse 312 und der Außenhülse 311 ist ein vorgegebener Abstand vorhanden. Dieser Zwischenraum ist im Betriebszustand bis zu der dem Absperrkörper 301 abgewandten Stirnfläche 310 des Absperrsitzes 302 mit Katalysatorpartikel 4 gefüllt, so daß der Absperrsitz 302 auf der Endfläche der Katalysatorschüttung 4 aufliegt und die perforierte Schutzhülse 312 vollständig in der Katalysatorschüttung 4 eingebettet ist. Der Innenraum 313 der Schutzhülse 312 ist vollständig frei von Schüttungspartikeln. Die Perforierung der Schutzhülse 312 ist so ausgelegt, daß das Reaktionsgasgemisch G ungehindert hindurchströmen kann, aber ein Eindringen von Schüttungspartikeln 4 verhindert wird.

Die perforierte Schutzhülse 312 weist einen ersten Abschnitt 314 auf, dessen Innendurchmesser dem Durchmesser des radialen Innenrandes der besagten Stirnfläche 310 entspricht und der an diesem Innenrand befestigt ist und dort eine Eintrittsöffnung 315 ausbildet.

An dem dem Absperrsitz 302 abgewandten Ende des ersten Abschnitts 314 schließt sich ein zweiter Abschnitt 316 an, dessen Durchmesser kleiner ist als der Durchmesser des ersten Abschnitts 314. Die Länge des zweiten Abschnitts 316 ist mindestens so groß wie der Abstand von Absperrkörper 301 und Absperrsitz 302 in Achsrichtung vor Erreichen der Grenztemperatur, d. h. wie der Verschiebeweg des Absperrkörpers 301 hin zum Absperrsitz 302 bei Erreichen der Grenztemperatur.

Der Absperrkörper 301 ist an einem Ende eines Führungsstabes 317 relativ zu diesem unverschieblich befestigt, wobei der Führungsstab 317 aus der freien Stirnfläche des kegelstumpfförmigen Abschnitts 304 heraus verläuft. Der Führungsstab 317 erstreckt sich durch eine Führungshülse 318 hindurch, die zentrisch in der Eintrittsöffnung 315 der perforierten Schutzhülse 312 angebracht ist, in diese hinein. Sein zweites Ende ist in eine Lotsicherung 319 eingeschmolzen, die mittels einer Lothalterung 320 im ersten Abschnitt 314 der perforierten Schutzhülse 312 nahe deren zweiten Abschnitt 316 relativ zur Schutzhülse 312 unverschieblich befestigt ist.

Die Zusammensetzung des Lotes 319 und damit sein Schmelzpunkt ist auf die Reaktionsbedingungen, im speziellen auf die Temperaturen des Wärmeträgers und die vorgegebene Grenztemperatur abgestimmt.

An die abzuschmelzende Lotverbindung 319 können zusätzlich noch Rippen angebracht werden, um die Wärmeleitung dorthin noch zu verbessern, bzw. das Lot 319 kann teilweise rippenförmig ausgestaltet sein.

Eine auf Zug vorgespannte Feder 321 - im dargestellten Beispiel eine Schraubenfeder - ist mit einem Ende an der Lothalterung 320 und mit dem anderen Ende nahe der Führungshülse 318 auf deren der Lotsicherung 319 zugewandten Seite an dem Führungsstab 317 befestigt.

Im nicht ausgelösten Zustand der Vorrichtung 300, d. h. bei nicht geschmolzener Lotsicherung 319, strömt das Reaktionsgasgemisch G zwischen Absperrkörper 301 und Absperrsitz 302 hindurch, durch die mittige Öffnung des Absperrsitzes 302 hinein in die Eintrittsöffnung 315 der perforierten Schutzhülse 312, an der Führungshülse 318 und der Schraubenfeder 321 sowie der Lotsicherung 319 vorbei zunächst radial nach außen durch die perforierte Wand der Schutzhülse 312 hindurch und dann wieder im wesentlichen gleichmäßig verteilt über den gesamten Schüttungsquerschnitt weiter längs des Reaktionsrohrs 2.

Nähert sich nun entgegen der Strömungsrichtung des Reaktionsgasgemisches G ein Heißpunkt 7 - wie in Figur 3 dargestellt - , so schmilzt das Lot 319 bei der vorgegebenen Grenztemperatur und gibt dadurch das zweite Ende des Führungsstabes 317 frei. Dadurch wiederum kann sich die auf Zug vorgespannte Feder 321 zusammenziehen und so den Führungsstab 317 in die Schutzhülse 312 hinein und damit den Absperrkörper 301 auf den Absperrsitz 302 ziehen. Da der Raum, in dem sich die Feder 321 erstreckt, und der Raum, in den hinein sich der Führungsstab 317 nach dem Abschmelzen des Lotes 319 verschiebt, frei von Partikeln 4 sind, ist eine ungehinderte Bewegung der Feder 321 und des Führungsstabes 317 gewährleistet.

Dabei ist die verbleibende Federkraft im teilweise entspannten Zustand der Feder 321 so eingestellt, daß ein gasdichter Sitz der Dichtfläche 305 des Absperrkörpers 301 auf der Sitzfläche 307 des Absperrsitzes 302 gewährleistet ist, noch unterstützt durch den am Absperrkörper 301 anliegenden Gasdruck. Der Durchströmungsquerschnitt dieses Reaktionsrohrs 2 ist damit auf Null reduziert, so daß kein Reaktionsgasgemisch G mehr dieses Reaktionsrohr 2 durchströmt und somit der Heißpunkt 7 verlöscht.

Die in Figur 3 gezeigte Vorrichtung 300 ist für die Anordnung am gaseintrittsseitigen Ende der Schüttung 6 ausgelegt. Dabei kann dieses gaseintrittsseitige Ende sowohl das obere als auch das untere Ende eines Reaktionsrohrs 2 sein.

Wird die Vorrichtung 300, wie in Figur 3 gezeigt, am oberen Ende der Reaktionsrohre 2 montiert, so könnte die Feder 321 auch weggelassen werden, da dann der Schließmechanismus allein aufgrund der Schwerkraft funktioniert, d. h. der Absperrkörper 301 in den Absperrsitz 302 fällt.

Ist das gaseintrittsseitige Ende das untere Ende der Reaktionsrohre 2, so wird für diesen Einbauort die in Figur 3 gezeigte Vorrichtung 300 um 180° gedreht, wobei dann die Feder 321 als treibende Kraft für den Absperrkörper 301 erforderlich ist. Bei dieser Ausführungsform ist der Absperrkörper 301 möglichst leicht ausgeführt, um die notwendige Federkraft möglichst gering zu halten und um möglichst kleine Verzögerungen beim Schließen zu erreichen.

In vorteilhafter Weise kann bei dieser Ausführungsform 300 die Vorrichtung in Verbindung mit einer Katalysatorhalterung von unten in das Reaktionsrohr 2 eingeführt werden.

Das Füllen der Reaktionsrohre 2 ist bei dieser Anordnung äußerst einfach, da sich die Katalysator- oder Inertpartikel 4, 5, von oben in die Reaktionsrohre 2 eingefüllt, gleichmäßig um die Schutzhülse 312 der Vorrichtung 300 herum verteilen.

Wesentlich ist in jedem Fall, daß die Lotsicherung 319 tief in der Schüttung 6 eingebettet ist und bei Kontakt mit dem Heißpunkt 7 schnell schmilzt, damit der Schließmechanismus schließt bzw. der Heißpunkt 7 gelöscht ist, bevor der Heißpunkt 7 die Oberfläche der Schüttung 6 erreicht.

Auf diese Weise wird nur jeweils ein betroffenes, einzelnes Reaktionsrohr 2 des Rohrbündelreaktors außer Betrieb genommen und so ein Durchschlagen des Hochtemperaturbereiches 7 in die Gaseintrittshaube und ein damit verbundenes Entzünden des dort befindlichen explosionsfähigen Gasgemisches G, was wiederum ein Stillsetzen des gesamten Rohrbündelreaktors zur Folge hätte, verhindert.

Die in Figur 4 gezeigte Vorrichtung 400 entspricht in der Funktionsweise grundsätzlich derjenigen 300 von Figur 3. Auch diese Vorrichtung 400 kann am oberen oder am unteren Ende eines Reaktionsrohres 2 eingebaut sein.

Der Unterschied liegt darin, daß diese Vorrichtung 400 für eine Anordnung am gasaustrittsseitigen Ende der Reaktionsrohre 2 geeignet ist. Der Absperrsitz 402 ist bei dieser Ausführungsform 400 mit Abstand zur Endfläche der Schüttung 6 bzw. zur Eintrittsöffnung 415 der perforierten Schutzhülse 412 auf der der Feder 421 abgewandten Seite des Absperrkörpers 401 angeordnet, d. h. in Figur 4 oberhalb des Absperrkörpers 401, damit der Absperrkörper 401 nach Abschmelzen der Lotsicherung 419 von der Reaktionsgasströmung G in den Absperrsitz 402 gedrückt wird.

Der Absperrkörper 401 ist im Ausgangszustand, d. h. bei nicht geschmolzener Lotsicherung 419, in einem geringen Abstand von der Führungshülse 418 angeordnet. Bei der in Figur 4 dargestellten Ausführungsform 400 ist die Feder 421 auf Druck vorgespannt, um bei geschmolzener Lotsicherung 419 den Absperrkörper 401 von der Schüttung 6 weg bzw. den Führungsstab 417 aus der perforierten Schutzhülse 412 heraus zu drücken. Ein Ende der Feder 421 ist wieder an der Halterung 420 für die Lotsicherung 419 befestigt. Das andere Ende der Feder 421 ist in einem vorgegebenen Abstand von der Führungshülse 418 an dem Führungsstab 417 befestigt. Dieser Abstand ist so ausgelegt, daß ein ausreichender Weg zum Verschieben des Absperrkörpers 401 bis zum Absperrsitz 402 vorhanden ist.

Die Lotsicherung 419 ist wieder an dem zweiten freien Ende des Führungsstabes 417 befestigt, könnte jedoch an einer beliebigen Stelle des Abschnitts des Führungsstabs 417 befestigt sein, der sich aus der Feder 421 heraus erstreckt. Der Führungsstab 417 erstreckt sich vollständig in den zweiten Abschnitt 416 der Schutzhülse 412 hinein, so daß in dem in Figur 4 dargestellten Beispiel die Lotsicherung 419 sich am geschlossenen Ende dieses zweiten Abschnitts 416 befindet.

Erreicht der Heißpunkt 7 die Lotsicherung 419, schmilzt diese und gibt den Führungsstab 417 frei. Daraufhin drückt die Feder 421 den Absperrkörper 401 nach oben in den Absperrsitz 402.

In der in Figur 4 dargestellten Einbaulage ist eine Feder 421 als treibende Kraft für den Absperrkörper 401 erforderlich. Wird die Vorrichtung 400 am unteren Ende der Reaktionsrohre 2 eingebaut, wird sie um 180° gedreht. In diesem Fall fällt der Absperrkörper 401 durch Schwerkraft in den Absperrsitz 402. Eine Feder 421 kann dann entfallen.

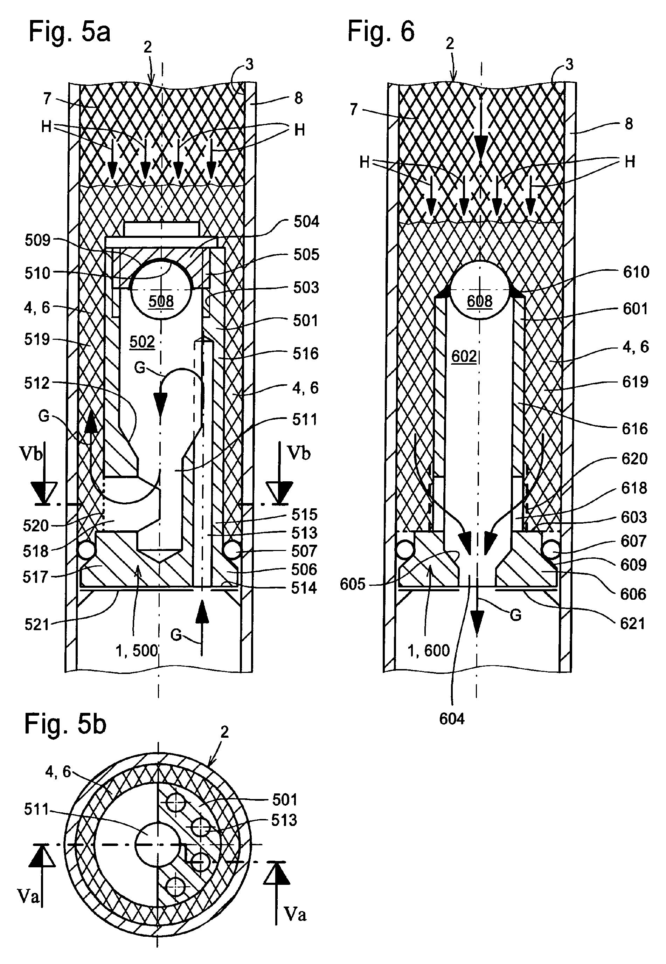

Die in den Figuren 5a, 5b und 6 dargestellten Ausführungsformen 500, 600 erfindungsgemäßer Vorrichtungen 1 sind zum Einbau am unteren Reaktionsrohrende ausgelegt. Ihr Schließmechanismus wirkt aufgrund der Schwerkraft.

Die in den Figuren 5a und 5b gezeigte Vorrichtung 500 ist zum Einbau am gaseintrittsseitigen unteren Reaktionsrohrende ausgebildet. Sie weist einen hülsenförmigen Abschnitt 501 auf, der einen inneren länglichen Hohlraum 502 ausbildet, dessen eines Ende geschlossen und dessen anderes Ende offen ist. Das offene Ende des Hohlraums 502 bzw. des hülsenförmigen Abschnitts 501 ist mit einem Innengewinde 503 versehen. In dieses offene Ende ist ein Verschlußstopfen 504, der ein Außengewinde 505 aufweist, eingeschraubt, so daß der hülsenförmige Abschnitt 501 und der Verschlußstopfen 504 gemeinsam einen an beiden Enden geschlossenen länglichen Hohlraum 502 ausbilden.

Der Außendurchmesser des hülsenförmigen Abschnittes 501, im folgenden auch kurz als Hülse 501 bezeichnet, ist um ein vorgegebenes Maß kleiner als der Innendurchmesser des Reaktionsrohres 2, um dem Reaktionsgasgemisch G ein ungehindertes Hindurchströmen zwischen Hülsenaußenwand und Reaktionsrohrinnenwand 3 zu ermöglichen.

An dem dem Verschlußstopfen 504 abgewandten Ende des hülsenförmigen Abschnitts 501 ist an der Außenfläche eine Außenverdickung 506 angeformt, deren Außendurchmesser nur etwas kleiner ist als der Innendurchmesser des Reaktionsrohres 2, um eine Abdichtung zur Reaktionsrohrinnenwand 3 zu ermöglichen.

Die Außenverdickung 506 ist aus einem konischen und einem zylindrischen Abschnitt gebildet. Eine Ringdichtung 507 liegt einerseits an dieser konischen Fläche und der weiter zurückgesetzten Hülsenaußenfläche sowie andererseits an der Innenwand 3 des Reaktionsrohres 2 an, um dort eine gasdichte Dichtung auszubilden.

Der von der Hülse 501 und dem Verschlußstopfen 504 gebildete Hohlraum 502 bildet einen Durchströmungskanal für das Reaktionsgasgemisch G aus, der durch einen Absperrkörper 508, der im dargestellten Beispiel als Kugel ausgebildet ist, verschließbar ist.

In der dem Hohlraum 502 zugewandten Innenfläche des Verschlußstopfens 504 ist eine halbkugelförmige Vertiefung 509 ausgebildet, in der die Kugel 508 eingelötet ist. Der Schmelzpunkt des Lotes 510 entspricht der vorgegebenen Grenztemperatur.

In einem vorgegebenen Abstand von dem Verschlußstopfen 504 mit der eingelöteten Kugel 508 verdickt sich die Hülsenwand nach innen in den Hohlraum 502 soweit hinein, daß der reduzierte Hohlraumdurchmesser 511 um ein vorgegebenes Maß geringer ist als der Durchmesser der Kugel 508. Am Übergang zum reduzierten Hohlraum 511 ist eine konische Fläche 512 ausgebildet, die eine Anlage- bzw. Sitzfläche für die Kugel 508 bei geschmolzenem Lot 510 bildet.

Eintrittsbohrungen 513 - im in Figur 5b dargestellten Beispiel vier - , münden einerseits in die dem Verschlußstopfen 504 abgewandte, verbreiterte Stirnflächen 514 der Hülse 501 und andererseits in den Hohlraum 502. Sie sind halbkreisförmig mit einem vorgegebenen Abstand in Umfangsrichtung über eine Hälfte der Stirnfläche 514 verteilt.

Die Eintrittsbohrungen 513 erstrecken sich parallel zur Längsachse der Hülse 501 vollständig durch diese innere Verdickung 515 hindurch und anschließend mit ihrem halben Querschnitt durch die nicht verdickte Hülsenwand 516, wodurch die Eintrittsbohrungen 513 in den Hohlraum 502 münden.

In dem den Eintrittsbohrungen 513 gegenüberliegenden Hülsenwandabschnitt 517 ist nahe der Außenverdickung 506 und der Ringdichtung 507 - d.h. im Bereich der Innenverdickung 515 - eine Austrittsöffnung 518 ausgebildet, durch die hindurch das Reaktionsgasgemisch G in den Ringraum 519 zwischen Hülsenaußenwand und Reaktionsrohrinnenwand 3 strömen kann. An der Außenseite der Austrittsöffnung 518 ist ein Schutzgitter 520 angebracht, das das Eindringen von Schüttungspartikeln 4 verhindert.

Im Betriebszustand, d. h. im in ein vertikales Reaktionsrohr 2 an dessen unterem Ende eingebauten Zustand, bildet der Verschlußstopfen 504 mit der eingelöteten Kugel 508 das obere Ende der Vorrichtung 500, während die Außenverdickung 506 das untere Ende der Vorrichtung 500 bildet, das auf einer Halterung 521 aufliegt. Der Verschlußstopfen 504 mit der eingelöteten Kugel 508 ist in der Katalysatorschüttung 6 eingebettet, während das andere Ende 514 der Vorrichtung 500 das untere Ende der Katalysatorschüttung 6 bildet und daher freiliegt.

Das Reaktionsgasgemisch G strömt von unten kommend in die Eintrittsbohrungen 513 ein, in denen es nach oben strömt und aus diesen oben in den Hohlraum 502 eintritt. In dem Hohlraum 502 wird die Strömung G nach unten zum unteren Hülsenende hin umgelenkt. Dort tritt sie durch die Austrittsöffnung 518 in den Ringraum 519 zwischen Hülse 501 und Reaktionsrohrinnenwand 3 aus, wobei wiederum eine Strömungsumkehrung nach oben stattfindet.

Erreicht der Heißpunkt 7, wie in Figur 5a dargestellt, das obere Ende der Vorrichtung 500, schmilzt die Lotsicherung 510 zwischen Verschlußstopfen 504 und Kugel 508, wodurch die Kugel 508 gelöst wird und nach unten fällt. Dieses Fallen wird noch durch die Strömung des Reaktionsgasgemisches G unterstützt. Die Kugel 508 fällt in den konischen Sitz 512 und versperrt so den Eintritt in den unteren reduzierten Hohlraum 511. Der Durchfluß ist auf diese Weise versperrt. Durch die Strömungsumlenkung wird die Kugel 508 in ihren konischen Sitz 512 gedrückt und dort gehalten.

Wie in Figur 5a dargestellt, kann eine erfindungsgemäße Vorrichtung, die am unteren Reaktionsrohrende eingebaut ist, gleichzeitig die Funktion einer Katalysatorhalterung 521 übernehmen. Es kann sich hierbei um die Kombination mit einer Standardkatalysatorhalterung handeln, oder die Halterung kann direkt in der Vorrichtung integriert sein. Es können weiterhin Bauarten zur Ausführung kommen, bei denen mehrere Katalysatorhalterungen zu einem Modul zusammengefaßt sind, um eine schnellere Montage zu ermöglichen.

Die in Figur 6 gezeigte Vorrichtung 600 ist zum Einbau am gasaustrittsseitigen unteren Reaktionsrohrende ausgelegt. Die Funktionsweise entspricht der in den Figuren 5a und 5b dargestellten Vorrichtung 500. Der Aufbau ist jedoch wesentlich einfacher, da die Fallrichtung der Kugel 608 und die Strömungsrichtung des Reaktionsgasgemisches G durch das Reaktionsrohr 2 gleich sind.

In dieser Ausführungsform weist die Vorrichtung 600 eine Hülse 601 auf, die an ihrem einen Ende unmittelbar durch eine eingelötete Kugel 608 verschlossen ist, wobei der Durchmesser der Kugel 608 kleiner ist als der Innendurchmesser der Hülse 601. Mit ihrem anderen, offenen Ende steht die Hülse 601 auf der Oberseite 603 eines Zylinderrings 606 auf, wobei die Oberseite 603 breiter ist als die Hülsenwand 616.

Der Außendurchmesser der Hülse 601 ist um ein vorgegebenes Maß kleiner als der Innendurchmesser des Reaktionsrohrs 2, um zwischen Hülse 601 und Reaktionsrohr 2 einen Ringraum 619 auszubilden, der dem Reaktionsgasgemisch G ein ungehindertes Durchströmen ermöglicht. Der Innendurchmesser der Hülse 601 entspricht dem Innendurchmesser des Zylinderrings 606 im Bereich dessen Oberseite 603, wobei die Oberseite 603 radial nach außen über die Hülsenwand 616 übersteht und dort eine Katalysatorhalterung ausbildet.

Zur von der Hülse 601 abgewandten Seite hin verdickt sich der Zylinderring 606 sowohl radial nach innen als auch radial nach außen mit abwechselnden zylindrischen und konischen Bereichen, wobei er außen zum Reaktionsrohr 2 hin abgedichtet ist und innen einen Strömungsdurchgang 604 ausbildet. Auf der radial innenliegenden Seite reduzieren die konischen Flächen 605 den Durchmesser des Strömungsdurchgangs 604 um ein vorgegebenes Maß auf einen Durchmesser, der kleiner ist als der Durchmesser der Kugel 608, und bilden so einen Sitz für die Kugel 608 aus. Die radial außenliegenden konischen Flächen 609 vergrößern den Außendurchmesser des Zylinderrings 606 auf einen Außendurchmesser, der nur etwas kleiner ist als der Innendurchmesser des Reaktionsrohrs 2. Eine Ringdichtung 607 liegt einerseits dort an dem Zylinderring 606 und andererseits an der Reaktionsrohrinnenwand 3 an, um den Zwischenraum 619 zwischen Zylinderring 606 und Reaktionsrohrinnenwand 3 gasdicht abzudichten.

Im in ein Reaktionsrohr 2 eingebauten Zustand ist das obere Ende der Vorrichtung 600 in die Katalysatorschüttung 6 eingebettet, während ihr unteres Ende das untere Ende der Katalysatorschüttung 6 bildet.

Der Zylinderring 606 ist dabei auf einer Katalysatorhalterung 621 gelagert oder kann selbst als solche ausgebildet sein.

Im dem auf dem Zylinderring 606 aufstehenden Endbereich der Hülsenwand 616 sind Durchtrittsöffnungen 618 für das Reaktionsgasgemisch G ausgebildet, durch die das Reaktionsgasgemisch G von außen in das Hülseninnere 602 gelangt, von wo aus es durch den Strömungsdurchgang 604 im Zylinderring 606 weiter nach unten strömt. Auf der Außenseite der Durchtrittsöffnungen 618 sind Schutzgitter 620 - z. B. in Form einer perforierten Hülse - angebracht, die ein Eindringen von Partikeln 4 der Schüttung 6 verhindern.

Im normalen Betrieb strömt das Reaktionsgasgemisch G an der Kugel 608 vorbei nach unten in den Ringraum 619 zwischen Hülsenaußenwand und Reaktionsrohrinnenwand 3. Durch die Durchtrittsöffnungen 618 hindurch strömt das Reaktionsgasgemisch G von außen in das Hülseninnere 602 und von dort durch den Strömungsdurchgang 604 im Zylinderring 606 nach unten.

Erreicht der Heißpunkt 7 das obere Ende - wie in Figur 6 dargestellt - , schmilzt das Lot 610. Die Kugel 608 wird dadurch gelöst und fällt unterstützt durch die Strömung des Reaktionsgasgemisches G nach unten in den konischen Sitz 605 und versperrt so den Durchfluß.

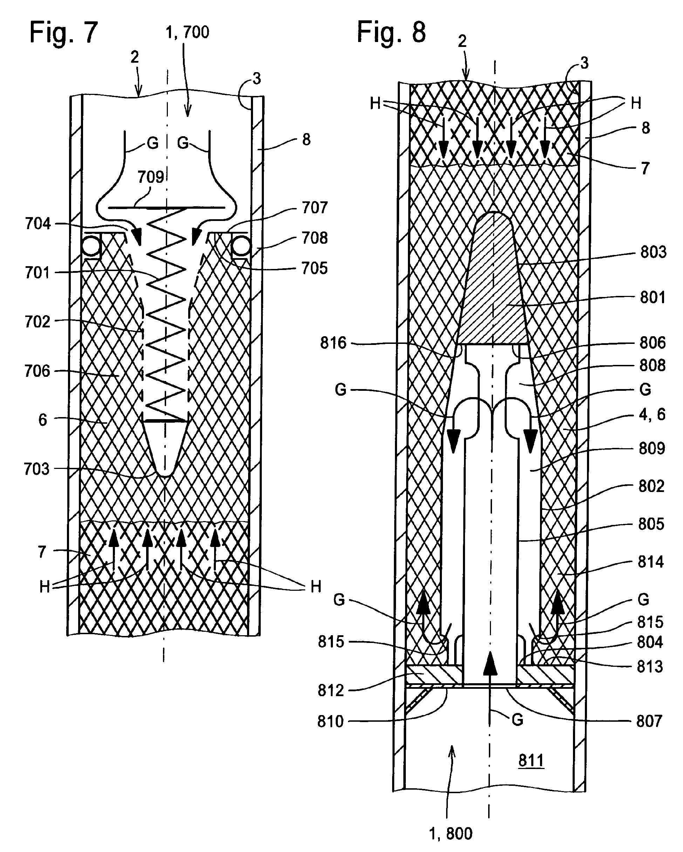

Figur 7 zeigt eine erfindungsgemäße Vorrichtung 700, die ein Element 701 aufweist, das aus einem Material mit Formgedächtnisfunktion gebildet ist. Die Zusammensetzung des Materials, vorzugsweise ein Metall, ist so eingestellt, daß es bei der vorgegebenen Grenztemperatur seine ursprüngliche Form wieder einnimmt. Diese Ausführungsform 700 ist insbesondere für die gaseintrittsseitigen Reaktionsrohrenden geeignet und kann sowohl am oberen als auch am unteren Reaktionsrohrende eingebaut werden.

Das Element 701 mit Formgedächtnisfunktion ist von einer perforierten gasdurchlässigen Hülse 702 umschlossen, die ein geschlossenes Ende bzw. einen Hülsenboden 703 und ein offenes Ende 704 aufweist, aus dem sich das Element 701 mit Formgedächtnisfunktion herauserstreckt.

Die Hülse 702 ist im in ein Reaktionsrohr 2 eingesetzten Zustand in der Katalysatorschüttung 6 eingebettet, wobei ihr offenes Ende 704 in die Endfläche 705 der Katalysatorschüttung mündet. Die Einbettung in die Katalysatorschüttung 6 erfolgt analog zu der in Figur 3 beschriebenen Vorrichtung 300.

Die Außenfläche der Hülse 702 weist einen vorgegebenen Abstand zur Reaktionsrohrinnenwand 3 auf, um eine ungehinderte Strömung des Reaktionsgasgemisches G im Zwischenraum 706 zwischen Hülse 702 und Reaktionsrohrinnenwand 3 zu ermöglichen.

Die Hülse 702 ist an ihrem offenen Ende 704 - dem in Figur 7 oberen Ende - auf der Außenseite mit einer sich radial erstreckenden ringförmigen Scheibe 707 verbunden, die im eingebauten Zustand zur Reaktionsrohrinnenwand 3 abgedichtet 708 ist.

Im dargestellten Ausführungsbeispiel 700 ist das Element 701 mit Formgedächtnisfunktion spiralförmig gewickelt, plastisch gelängt und mit einem Ende nahe dem Hülsenboden 703 befestigt. Am anderen Ende des Elements 701, das auf dem offenen Ende 704 der Hülse 702 vorragt, ist ein Deckel 709 befestigt, dessen Außendurchmesser größer ist als der Innendurchmesser der ringförmigen Scheibe 707. Im Normalbetrieb - d. h. im nicht ausgelösten Zustand - weist der Deckel 709 in Längsrichtung der Vorrichtung 700 bzw. des Reaktionsrohrs 2 einen vorgegebenen Abstand zur ringförmigen Scheibe 707 auf, so daß ein vorgegebener Durchströmungsquerschnitt für das Reaktionsgasgemisch G freigelassen bzw. vorhanden ist.

Im Normalbetrieb strömt das Reaktionsgasgemisch G an dem Deckel 709 und der ringförmigen Scheibe 707 vorbei in die perforierte Hülse 702 und anschließend durch die Perforation radial nach außen in die Katalysatorschüttung 6. Bewegt sich ein Heißpunkt 7 im Reaktionsrohr 2 auf den Hülsenboden 703 zu - in Figur 7 nach oben - , so erwärmt er beim Entlangstreichen entlang der perforierten Hülse 702 zunehmend auch das Element 701 aus Metall mit Formgedächtnisfunktion. Dieses zieht sich bei Erreichen der Grenztemperatur zusammen, wodurch der an seinem freien Ende befindliche Deckel 709 auf die ringförmige Scheibe 707 gezogen und dadurch der Durchströmungsquerschnitt versperrt wird.

Ausführungsformen, bei denen ein Verschluß mit einem Werkstoff mit Formänderungsverhalten - z. B. ein Metall mit Formgedächtnisfunktion oder ein Bimetall - eingesetzt wird oder eine Kombination aus abschmelzendem Lot in Verbindung mit einer Schließfeder, können gegeneinander ausgetauscht werden.

Figur 8 zeigt eine Ausführungsform 800 einer erfindungsgemäßen Vorrichtung 1, bei der bei Erreichen der Grenztemperatur ein flüssigschmelzendes Material 801 aus dem Hochtemperaturbereich 7 heraus in einen kälteren Bereich fließt und dort wieder erstarrt. Die in Figur 8 dargestellte Ausführungsform 800 ist für den Einbau in ein unteres gaseintrittsseitiges Reaktionsrohrende geeignet.

Sie weist eine gasdichte Hülse 802 auf, die ein geschlossenes und ein offenes Ende 803, 804 hat und mit Abstand einen Hohlzylinder 805 konzentrisch umschließt, der ebenfalls ein geschlossenes und ein offenes Ende 806, 807 aufweist, wobei das offene Ende 807 des Hohlzylinders 805 nahe dem offenen Ende 804 der gasdichten Hülse 802 liegt. Der Außendurchmesser der Hülse 802 ist um ein vorgegebenes Maß kleiner als der Innendurchmesser des Reaktionsrohrs 2.

Der Hohlzylinder 805 bildet einen Strömungskanal für das Reaktionsgasgemisch G aus, wobei sein offenes Ende 807 die Eintrittsöffnung ist.

Nahe dem anderen, geschlossenen Ende 806 des Strömungskanals bzw. des Hohlzylinders 805 sind in dessen Wand Durchtrittsöffnungen 808 ausgebildet, durch die hindurch das Reaktionsgasgemisch G in den Ringraum 809, der zwischen der Innenfläche der gasdichten Hülse 802 und der Außenfläche des Strömungskanals 805 ausgebildet ist, strömen kann.

Die Hülse 802 steht auf einer Katalysatorhalterung 810 auf, wobei der Strömungskanal 805 mit seiner Eintrittsöffnung 807 - dem in Figur 8 unteren Ende - durch die Katalysatorhalterung 810 hindurch in den partikelfreien Bereich 811 des unteren Reaktionsrohrendes mündet.

Auf der Katalysatorhalterung 810 ist um den Hohlzylinder 805 herum ein Ring 812 aus einem Trägermaterial angeordnet, dessen Schmelztemperatur deutlich über der Grenztemperatur bzw. der Schmelztemperatur des flüssigschmelzenden Materials 801 liegt.

Dieser Ring 812 aus Trägermaterial dient als Aufstandsfläche für die gasdichte Hülse 802 und erstreckt sich im Zwischenraum 813 zwischen der Außenfläche des Hohlzylinders 805 und der Reaktionsrohrinnenwand 3. Der äußere Ringraum 814 zwischen gasdichter Hülse 802 und Reaktionsrohrinnenwand 3 ist im eingebauten Zustand der Vorrichtung 800 mit Katalysatormaterial 4 gefüllt.

Nahe dem Ende der gasdichten Hülse 802, das auf der Katalysatorhalterung 810 bzw. auf dem Ring 812 aus Trägermaterial aufsteht, weist die Wand der gasdichten Hülse 802 Austrittsöffnungen 815 für das Reaktionsgasgemisch G auf, durch die hindurch das Reaktionsgasgemisch G aus der Vorrichtung 800 austritt und in die Katalysatorschüttung 6 eintritt.

Auf dem der Eintrittsöffnung 807 abgewandten, geschlossenen Ende 806 des Hohlzylinders 805 ist ein Material bzw. Lot 801 angeordnet, das den Raum bis zum geschlossenen Ende 803 der Hülse 802 ausfüllt und bei der vorgegebenen Grenztemperatur flüssig abschmilzt. Zwischen der geschlossenen Endfläche 806 des Hohlzylinders 805 und der gasdichten Hülse 802 ist in radialer Richtung ein Ringspalt 816 vorgegebener Größe ausgebildet, durch den hindurch das abschmelzende, flüssige Material 801 nach unten fließt.

Im Normalbetrieb strömt das Reaktionsgasgemisch G durch die Eintrittsöffnung 807 nach oben in den Hohlzylinder 805 ein und durch dessen Durchtrittsöffnungen 808 in den Ringraum 809 zwischen Hohlzylinder 805 und gasdichter Hülse 802 wieder aus. In dem Ringraum 809 strömt das Reaktionsgasgemisch G nach unten und tritt durch die Austrittsöffnungen 815 der gasdichten Hülse 802 in den Ringraum 814 zwischen dieser 802 und der Reaktionsrohrinnenwand 3 aus, wo es im Reaktionsrohr 2 wieder nach oben strömt. Das Reaktionsgas G wird bei dieser Variante ähnlich wie bei einem Syphon mit Strömungsumlenkung durch die Vorrichtung 800 geführt.

Nähert sich ein Heißpunkt 7 dem eingebetteten Ende 803 der Vorrichtung 800 - in Figur 8 von oben - , so schmilzt das dort vorhandene Lot 801. Das flüssige Lot 801 fließt in den tiefer gelegenen, dem Heißpunkt abgewandten Bereich - d. h. in den am unteren Ende der Vorrichtung 800 von Hülse 802, Hohlzylinder 805 und Trägermaterial 812 ausgebildeten ringförmigen wannenartigen Bereich - und wird dort aufgefangen. In der Wanne erstarrt das Lot 801 durch Wärmeableitung an die Reaktionsrohrwand 8 und an das in den Hohlzylinder 805 eintretende Reaktionsgasgemisch G, gegebenenfalls unter Einbeziehung eines porösen Trägermaterials 812. Das erstarrende bzw. erstarrte Lot 801 verschließt den Strömungsquerschnitt.

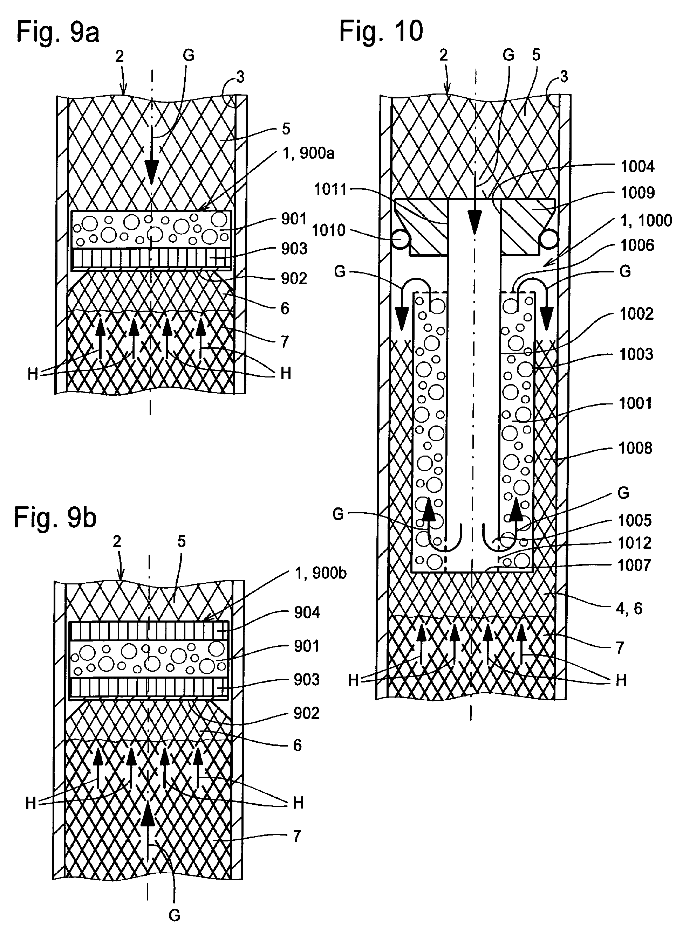

Figuren 9a und 9b zeigen zwei Ausführungsformen 900a, 900b einer erfindungsgemäßen Vorrichtung 1, bei der bei Erreichen der Grenztemperatur ein Material 901 zäh abschmilzt und in Längsrichtung des Reaktionsrohrs 2 im wesentlichen an seinem Ort verbleibt, dort ihm in Strömungsrichtung nachgeschaltete Poren verstopft und damit den Strömungsdurchgang versperrt. Die in Figur 9a und 9b dargestellten Vorrichtungen 900a, 900b können sowohl in den oberen Endbereich als auch in den unteren Endbereich eines Reaktionsrohrs 2 eingebaut werden und dabei sowohl am gaseintrittsseitigen als auch am gasaustrittsseitigen Reaktionsrohrende.

Anstatt eines zäh abschmelzenden Materials 901 kann auch ein bei Erreichen der Grenztemperatur aufquellendes oder aufschäumendes Material eingesetzt werden, das in solchen Zuständen die Strömungskanäle verstopft und verschließt.

Die in Figur 9a dargestellte Ausführungsform 900a ist für eine Strömungsrichtung des Reaktionsgasgemisches G im Reaktionsrohr 2 von oben nach unten ausgelegt. Die Vorrichtung 900a weist eine auf der Katalysatorschüttung 6 liegende Halterung 902 auf, auf der wiederum eine poröse Trägerschicht 903 aufliegt, die z. B. aus einer Metallschüttung, einem Sintermaterial oder einem Metallgewebe gebildet sein kann, ähnlich einem Filterkuchen. Auf dieser porösen Trägerschicht 903 liegt eine Schicht aus hochviskosschmelzendem Material 901, wie z. B. ein zäh abschmelzendes Lot, auf. Bei dem Ausführungsbeispiel gemäß Figur 9a befindet sich über der Vorrichtung 900a noch eine Schüttung aus Inertmaterial 5.

Wenn sich der Heißpunkt 7 der Vorrichtung 900a von oben oder von unten (wie in Figur 9a dargestellt) nähert, schmilzt das Lot 901 bei Erreichen der Grenztemperatur und wird von dem durchströmenden Reaktionsgasgemisch gegen die poröse Trägerschicht 903 gedrückt, in der es die Poren schließt und so den Strömungsdurchgang versperrt.

Bei dem in Figur 9b dargestellten Ausführungsbeispiel 900b strömt das Reaktionsgasgemisch G von unten nach oben. Hier wird über der Schicht aus hochviskosschmelzendem Material 901 zusätzlich eine weitere poröse Trägerschicht 904 angeordnet, damit das durch den Heißpunkt 7 geschmolzene Material 901 nicht mit dem Reaktionsgasgemisch G mitgerissen wird, sondern gegebenenfalls in dieser porösen Trägerschicht 904 die Poren verschließt und so den Strömungsdurchgang versperrt. Dies ist eine zusätzliche Sicherheitsmaßnahme trotz der ohnehin hochviskosen Beschaffenheit des geschmolzenen Materials 901.

Figur 10 zeigt eine Ausführungsform 1000, bei der das zäh abschmelzende Material 1001 als poröse Schüttung zwischen zwei konzentrischen zylindrischen Hülsen 1002, 1003 ausgebildet ist. Diese Ausführungsform 1000 ist zum Einbau in das gas-eintrittsseitige Ende eines Reaktionsrohrs 2 geeignet.

Die innere Hülse 1002 weist zwei offene Enden 1004, 1005 auf, während die äußere Hülse 1003 ein offenes 1006 und ein durch einen Boden 1007 verschlossenes Ende aufweist.

Zwischen der Außenwand der äußeren Hülse 1003 und der Reaktionsrohrinnenwand 3 ist ein Ringraum 1008 ausgebildet, der einen vorgegebenen Durchströmungsquerschnitt ausbildet.

Die innere 1002 der beiden konzentrischen Hülsen ist an einem Ende 1004 von einem Zylinderring 1009 umgeben, der auf seiner Außenfläche nacheinander einen zylindrischen, konischen und wieder einen zylindrischen Abschnitt aufweist und der gegen die Reaktionsrohrinnenwand 3 mittels einer Ringdichtung 1010 abgedichtet ist. Der Zylinderring 1009 wird von einer mittigen Zylinderbohrung 1011 durchlaufen, durch die hindurch sich das eine Ende 1004 der inneren konzentrischen Hülse 1002 erstreckt, die in der Zylinderbohrung 1011 befestigt ist.

Das andere Ende 1005 der inneren konzentrischen Hülse 1002 endet in einem vorgegebenen Abstand von dem Boden 1007 der äußeren zylindrischen Hülse 1003, wobei der Abstand bis zum Boden 1007 von einer perforierten Hülse 1012 überbrückt wird. Diese perforierte Hülse 1012 verhindert, daß die poröse Schüttung 1001 zwischen den zwei Hülsen 1002, 1003 in den unteren Bereich der inneren Hülse 1002 eindringt.

Das offene Ende 1006 der äußeren konzentrischen Hülse 1003 endet in einem vorgegebenen Abstand von dem Zylinderring 1009, so daß eine ungehinderte Strömungsumlenkung des Reaktionsgasgemisches G von dem Zwischenraum zwischen den beiden konzentrischen Hülsen 1002, 1003 in den Ringraum 1008 zwischen äußerer Hülse 1003 und Reaktionsrohrinnenwand 3 möglich ist.

Die beiden konzentrischen Hülsen 1002, 1003 erstrecken sich im eingebauten Zustand in die Katalysatorschüttung 6 hinein, so daß das zwischen beiden angeordnete zäh abschmelzende Material 1001 in der Katalysatorschüttung 6 eingebettet ist. Auf der den konzentrischen Hülsen 1002, 1003 abgewandten Seite des Zylinderringes 1009 kann sich noch eine Schüttung aus Inertmaterial 5 befinden.

Wenn der Heißpunkt 7 sich dem in das Katalysatormaterial 4 eingebetteten zäh schmelzenden Material 1001 nähert, schmilzt dieses bei Erreichen der vorgegebenen Grenztemperatur. Die Gasströmung führt das abgeschmolzene Material 1001 weg vom Heißpunkt 7 in Richtung auf den Zylinderring 1009 - in dem in Figur 10 dargestellten Ausführungsbeispiel in den oberen Teil der Schüttung 6 - , wo es wieder erstarrt und die Strömungswege verstopft. Dadurch wird ein Mitreißen der Schmelze 1001 durch die Gasströmung sicher unterbunden.

Figur 10 zeigt den Einbau in den oberen Bereich eines Reaktionsrohrs 2.

Für den Einbau in den unteren Bereich eines Reaktionsrohrs 2 wird diese Vorrichtung 1000 um 180° gedreht, so daß der Zylinderring 1009 mit der Eintrittsöffnung 1004 der inneren konzentrischen Hülse 1002 wieder auf der Gaseintrittsseite der Vorrichtung 1000 liegt.

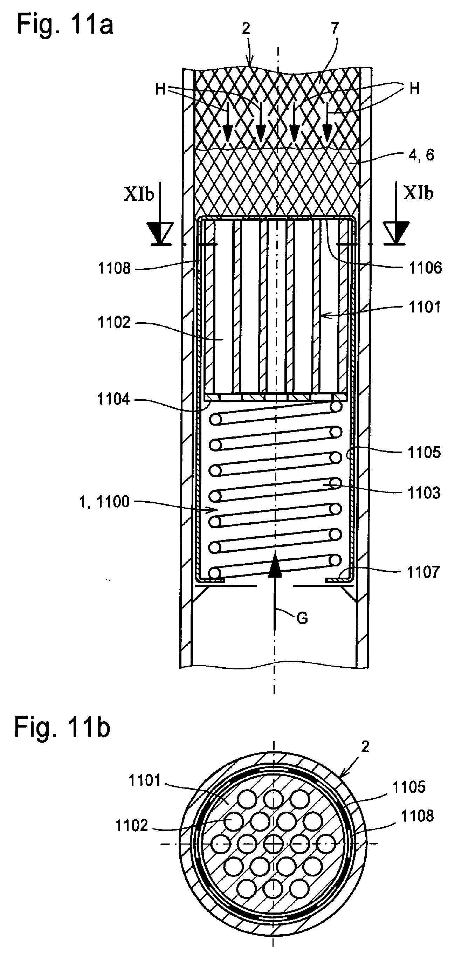

Die Figuren 11a und 11b zeigen eine Ausführungsform 1100 einer erfindungsgemäßen Vorrichtung 1, bei der bei Erreichen der Grenztemperatur ein Element bzw. Material 1101 zäh erweicht und in Längsrichtung des Reaktionsrohrs 2 gestaucht bzw. zusammengedrückt wird und dadurch den Durchströmungsquerschnitt versperrt. Diese Ausführungsform 1100 ist sowohl für die gaseintritts- als auch für die gasaustrittseitigen Reaktionsrohrenden geeignet und kann sowohl am oberen als auch am unteren Reaktionsrohrende eingebaut werden.

Ein geeignetes Material für das Element 1101 ist z. B. Glas. Glas ist ein hochviskos schmelzendes Material, das auch als gefrorene Flüssigkeit bezeichnet wird, da es beim Übergang vom festen in den flüssigen Zustand seine Struktur kaum ändert. Mit zunehmender Temperatur erweicht das Glas und wird zähfließend. Seine Form verändert es dabei jedoch ohne größere Krafteinwirkung kaum.

Das Element 1101 ist gasdurchlässig ausgebildet. Im dargestellten Ausführungsbeispiel ist es ein monolithisches Element mit Strömungskanälen 1102, die parallel zur Längsrichtung des Reaktionsrohres 2 verlaufen können. Das Element 1101 kann aber auch aus (nicht dargestellten) parallel angeordneten Glasstäben oder Gläsröhrchen gebildet sein. Darüber hinaus ist es auch denkbar, das Element 1101 aus unregelmäßig angeordneten Füllkörpern oder geordneten Füllkörperpackungen zu bilden.

Das Element 1101 kann somit aus einem einzelnen Körper oder einer Anordnung von mehreren losen oder verbundenen Körpern gebildet sein. Die Struktur des Elementes 1101 unterliegt nur wenigen Beschränkungen. Diese bestehen darin, daß das Element 1101 ausreichend gasdurchlässig ist, keinen hohen Druckverlust aufweist und Selbsthemmung ausgeschlossen ist. Unter Selbsthemmung wird in diesem Zusammenhang ein Zustand verstanden, bei dem sich einzelne Abschnitte des Elements 1101 aufgrund der in Längsrichtung des Reaktionsrohrs 2 wirkenden Druckkraft gegeneinander und gegen die Innenwand der Vorrichtung 1100 oder des Reaktionsrohrs 2 derart verkeilen, daß die Druckkraft auf Abschnitte des Elements, die hinter den verkeilten Abschnitten liegen, keine Wirkung mehr ausübt. Dieser Effekt tritt beispielsweise bei einer losen, ungeordneten Kugelschüttung auf. Die Selbsthemmung kann durch Versinterung der Füllkörper an ihren Berührungsflächen oder durch eine geeignet geordnete Packung der Füllkörper vermieden werden.

Ist das Element 1101 aus einer Vielzahl von Glaskugeln gebildet, so liegt das Verhältnis von Glaskugeldurchmesser zu Innendurchmesser der Vorrichtung 1100 bzw. Innendurchmesser des Reaktionsrohres 2 in einem Bereich zwischen vorzugsweise 10 % und 46 %, besonders bevorzugt zwischen 16 % und 33 % und ganz besonders bevorzugt zwischen 20 % und 24 %. Dadurch wird im ordnungsgemäßen Betrieb eine ausreichende Gasdurchlässigkeit gewährleistet, während bei Erreichen der Grenztemperatur der Verformungsaufwand für ein sicheres Verschließen des Durchströmungsquerschnittes noch ausreichend gering ist.
Die gleichen Verhältnisse gelten, wenn statt Glaskugeln Glasstäbe oder Glasrohre verwendet werden. Dann ersetzt der Außendurchmesser der Glasstäbe bzw. Glasrohre den Kugeldurchmesser in den vorgenannten Verhältnissen.

Das Verhältnis der Länge des Elementes 1101 in Längsrichtung des Reaktionsrohres 2 zum Innendurchmesser der Vorrichtung 1100 bzw. des Reaktionsrohres 2 liegt in einem Bereich zwischen vorzugsweise 20 % und 1000 %, besonders bevorzugt zwischen 50 % und 400 % und ganz besonders bevorzugt zwischen 60 % und 150 %.

Das Element 1101 wird von einer Vorspanneinrichtung 1103 unter Druckvorspannung gesetzt. Im dargestellten Ausführungsbeispiel ist diese Vorspanneinrichtung als eine Druckfeder 1103 ausgebildet, die in Längsrichtung des Reaktionsrohr 2 an dem Element 1101 anliegt. Das Material der Druckfeder 1103 ist so gewählt, daß es für die vorherrschende Betriebstemperatur eine ausreichende Zeitstandfestigkeit aufweist. Zur gleichmäßigen Übertragung der Kraft der Druckfeder 1103 auf das Element 1101 ist zwischen dem Element 1101 und der Druckfeder 1103 eine perforierte Scheibe 1104 angeordnet.

Die Vorspanneinrichtung könnte auch als eine das Element 1101 umgreifende oder sich durch das Element 1101 sich hindurch erstreckende Zugvorrichtung ausgebildet sein, beispielsweise in Form eines auf Zug vorgespannten Außennetzes oder zentralen Bandes.

Das Element 1101 befindet sich zusammen mit der Scheibe 1104 und der Druckfeder 1103 in einer Hülse 1105 mit perforierten Abschlußböden 1106, 1107. Im in ein Reaktionsrohr 2 eingebauten Zustand der Vorrichtung 1100 liegt das Element 1101 auf der der Katalysatorfüllung 4 zugewandten Seite. Der Außendurchmesser der Hülse 1105 ist in Abhängigkeit von den Toleranzen von Hülse 1105 und Innendurchmesser des Reaktionsrohres 2 so toleriert, daß ein Hineinfließen des zäh erweichenden Materials in den Spalt zwischen Reaktionsrohr 2 und Vorrichtung 1100 ermöglicht wird.

Die Hülse 1105 kann, wie in Figur 11a gezeigt, einteilig ausgeführt oder aus mehreren Teilen gebildet sein. Im dargestellten Ausführungsbeispiel überdeckt ein Abschlußboden 1106 vollständig die der Katalyatorfüllung 4 zugewandte Stirnseite des Elements 1101. Dagegen ist der Abschlußboden 1107 auf der Seite der Druckfeder 1103 ringförmig und nur so groß ausgebildet, daß die Druckfeder 1103 in der Hülse 1105 festgehalten ist. Im Umfangsbereich des Elements 1101 weist die Hülse 1105 über den Umfang verteilt Öffnungen 1108 auf, durch die hindurch erweichtes Glas bis zur Innenwand des Reaktionsrohres 2 fließen bzw. gedrückt werden kann, so daß dann die Vorrichtung 1100 zur Innenwand des Reaktionsrohres 2 hin abgedichtet ist.

Erreicht ein Hochtemperaturbereich 7 das Element 1101, erweicht es mit zunehmender Temperatur und wird durch die Kraft der Druckfeder 1103 sowie durch den Strömungsdruck zusammengedrückt. Dadurch werden auch die Strömungskanäle 1102 im Element 1101 verformt und zusammengedrückt, bis sie schließlich versperrt bzw. verstopft sind und das Element 1101 seine Gasdurchlässigkeit verloren hat. Zudem verstopft das Material des Elements 1101 die Durchgänge des perforierten Abschlußbodens 1106 an der Stirnseite des Elements 1101. Durch die Öffnungen 1108 am Umfang der Hülse 1105 fließt das erweichte Material bis zur Innenwand des Reaktionsrohres 2 und dichtet die Vorrichtung 1100 - wie bereits erwähnt - zu dieser Innenwand hin ab.

Damit die erfindungsgemäßen Vorrichtungen 1 in ihrer Funktion optimal wirksam werden können - unabhängig von der einzelnen Ausführungsform - , müssen diese gegen die Reaktionsrohrinnenwand 3 vollständig gasdicht abgedichtet sein. Erfindungsgemäß geschieht dies, wie weiter oben erläutert, z. B. durch eine am Umfang der Vorrichtung angebrachte Ringnut oder einen sonstigen gleichwertigen umlaufenden Sitz, in der bzw. dem sich eine ringförmige Dichtung befindet, oder bei einigen Ausführungsformen durch das abschmelzende oder aufflämmende Material selbst, das den Spalt zwischen Vorrichtung und Reaktionsrohrinnenwand ausfüllt.

Bei einigen Ausführungsbeispielen können die Vorrichtungen ganz oder zumindest teilweise in eine Inertschüttung eingebettet sein. Das kann dadurch erreicht werden, daß die Montage der Vorrichtung oder - je nach Ausführungsform - auch nur einige ihrer Teile vor oder während des Befüllens des Reaktionsrohrs mit der Partikelschüttung erfolgt oder die Vorrichtungen nachträglich in eine entsprechend präparierte Schüttung eingesetzt werden. Wichtig ist in jedem Fall der enge Kontakt der Vorrichtung zur Partikelschüttung, da so ein schnelles Ansprechen der Vorrichtungen erreicht wird.

Die Wirkungsweise erfindungsgemäßer Vorrichtungen 1 kann dadurch gesteigert werden, daß mindestens zwei Einzelvorrichtungen, die nicht notwendigerweise gemäß der gleichen Ausführungsform ausgebildet sind, miteinander kombiniert werden.

Die erfindungsgemäßen Maßnahmen sind besonders geeignet zur Durchführung von Partialoxidationsreaktionen, insbesondere zur Herstellung von Maleinsäureanhydrid, Phthalsäureanhydrid, (Meth)acrolein, (Meth)acrylsäure, Methyl(meth)acrylat und Acrylnitril sowie Essigsäure.

## Patentansprüche

1. Verfahren zum Betreiben eines Rohrbündelreaktors für exotherme Gasphasenreaktionen, der ein Rohrbündel mit katalysatorgefüllten Reaktionsrohren aufweist, deren eine Enden von einer Gaseintrittshaube und deren andere Enden von einer Gasaustrittshaube überspannt und die zur Abführung der Reaktionswärme an der Außenseite von einem Wärmeträger umströmt werden, mit den folgenden Schritten:
ein explosionsfähiges Gasgemisch wird über die Gaseintrittshaube in die Reaktionsrohre eingeleitet, und nach der Reaktion wird das gegebenenfalls immer noch explosionsfähige Gasgemisch über die Gasaustrittshaube aus diesen abgeleitet, wobei sich in den Reaktionsrohren jeweils ein Hochtemperaturbereich ausbildet, **gekennzeichnet durch** folgende Schritte:
eine Grenztemperatur in den Reaktionsrohren (2) wird vorgegeben, die über der sich bei Normalbetrieb des Rohrbündelreaktors einstellenden maximalen Temperatur im Hochtemperaturbereich der Reaktionsrohre (2) liegt, aber höchstens gleich der Entzündungstemperatur des explosionsfähigen Gasgemisches (G) ist; und
ein in Reaktionsrohren (2) sich jeweils ausbildender nicht betriebsmäßiger Hochtemperaturbereich (7), dessen maximale Temperatur mindestens gleich der Grenztemperatur ist und der in dem jeweiligen Reaktionsrohr (2) in dessen Längsrichtung wandert, wird noch im Reaktionsrohr (2) gestoppt, so dass ein Durchschlagen des Hochtemperaturbereichs (7) in die Gaseintritts- bzw. die Gasaustrittshaube verhindert wird.

2. Verfahren nach Anspruch 1, **dadurch gekennzeichnet, dass** zum Stoppen des Hochtemperaturbereichs (7) dieser zum Stehen gebracht wird.

3. Verfahren nach Anspruch 2, **dadurch gekennzeichnet, dass** die Ableitung der Reaktionswärme an Enden der Katalysatorfüllung (6) erhöht wird.

4. Verfahren nach Anspruch 2 oder 3, **dadurch gekennzeichnet, dass** die Gasströmungsgeschwindigkeit am gaseintrittsseitigen Ende der Katalysatorfüllung (6) lokal erhöht wird, um ein Wandern des Hochtemperaturbereichs (7) entgegen der Gasströmungsrichtung zum Stehen zu bringen.

5. Verfahren nach einem der Ansprüche 2 bis 4, **dadurch gekennzeichnet, dass** der Kühleffekt durch das eintretende Gas (G) am gaseintrittsseitigen Ende der Katalysatorfüllung (6) erhöht wird, um ein Wandern des Hochtemperaturbereichs (7) entgegen der Gasströmungsrichtung zum Stehen zu bringen.

6. Verfahren nach Anspruch 1, **dadurch gekennzeichnet, dass** zum Stoppen des Hochtemperaturbereichs (7) dieser gelöscht wird.

7. Verfahren nach Anspruch 6, **dadurch gekennzeichnet, dass** die Gasdurchströmung des betreffenden Reaktionsrohrs (2) unterbrochen wird.

8. Verfahren nach Anspruch 6, **dadurch gekennzeichnet, dass** die Reaktionsbedingungen in dem betreffenden Reaktionsrohr (2) verändert werden.

9. Verfahren nach Anspruch 8, **dadurch gekennzeichnet, dass** in den Reaktionsrohren (2) Flüssigkeiten und/oder Feststoffe angeordnet werden, die bei Erreichen der Grenztemperatur verdampfen und den Gasstrom inertisieren und/oder zusätzlich kühlen.

10. Vorrichtung für einen Rohrbündelreaktor für exotherme Gasphasenreaktionen, der ein Rohrbündel mit katalysatorgefüllten Reaktionsrohren (2) aufweist, deren eine Enden von einer Gaseintrittshaube und deren andere Enden von einer Gasaustrittshaube überspannt und die zur Abführung der Reaktionswärme an ihrer Außenseite von einem Wärmeträger umströmt werden, und der nach einem Verfahren gemäß den Ansprüchen 1 bis 7 betrieben wird, mit
Außenabmessungen, die zum Einsetzen der Vorrichtung (1) in ein Reaktionsrohr (2) ausgelegt sind, und mit
Einrichtungen, die einen Durchströmungsquerschnitt ausbilden, der bei Erreichen der Grenztemperatur eine vorgegebene Größe aufweist.

11. Vorrichtung nach Anspruch 10, **dadurch gekennzeichnet, dass** sie radial einwärts verlaufende Rippen (102) aufweist.

12. Vorrichtung nach Anspruch 10, **dadurch gekennzeichnet, dass** sie einen Vollquerschnitt mit einer mittigen Längsbohrung (201) aufweist, die sich in ihren Endbereichen (202) radial aufweitet.

13. Vorrichtung nach einen der Ansprüche 10 bis 12, **dadurch gekennzeichnet, dass** sie aus gut wärmeübertragendem Material gebildet ist.

14. Vorrichtung nach Anspruch 10, **dadurch gekennzeichnet, dass** sie einen nicht durchströmbaren Verdrängerkörper (1201) aufweist mit einer Außenumfangswand (1203), die im in ein Reaktionsrohr (2) eingesetzten Zustand mit einem vorgegebenen Abstand längs der Innenwand (3) des Reaktionsrohrs (2) verläuft, wobei der Verdrängerkörper (1201) in Längsrichtung des Reaktionsrohrs (2) schlechte Wärmeleiteigenschaften aufweist.

15. Vorrichtung nach einem der Ansprüche 10 bis 14, **dadurch gekennzeichnet, dass** die Größe des Durchströmungsquerschnitts bei Erreichen der Grenztemperatur auf Null reduzierbar ist.

16. Vorrichtung nach Anspruch 15, **dadurch gekennzeichnet, dass** sie wenigstens ein Teil (319, 419, 510, 610, 701, 801, 901, 1001, 1101) aus einem Material aufweist, dass bei der vorgegebenen Grenztemperatur seine Formgebung und/oder Festigkeit ändert und **dadurch** eine Unterbrechung der Gasdurchströmung durch das Reaktionsrohr (2) bewirkt.

17. Vorrichtung nach Anspruch 16, **dadurch gekennzeichnet, dass** das Teil (801, 901, 1001) bei Erreichen der Grenztemperatur den Durchströmungsquerschnitt selbst verschließt.

18. Vorrichtung nach Anspruch 16, **dadurch gekennzeichnet, dass** das Teil (319, 419, 510, 610, 701) bei Erreichen der Grenztemperatur einen Schließmechanismus auslöst.

19. Vorrichtung nach einem der Ansprüche 16 bis 18, **dadurch gekennzeichnet, dass** das Material ein Bimetall ist.

20. Vorrichtung nach Anspruch 17, **dadurch gekennzeichnet, dass** das Material (801, 901, 1001) bei Erreichen der Grenztemperatur abschmilzt und den Durchströmungsquerschnitt verstopft.

21. Vorrichtung nach Anspruch 20, **dadurch gekennzeichnet, dass** das Material (901, 1001) zäh abschmilzt und in Längsrichtung des Reaktionsrohrs (2) im Wesentlichen an seinem Ort verbleibt.

22. Vorrichtung nach Anspruch 20, **dadurch gekennzeichnet, dass** das Material (801) flüssig abschmilzt und aus dem Hochtemperaturbereich (7) heraus in einen kälteren Bereich fließt und dort wieder erstarrt.

23. Vorrichtung nach einem der Ansprüche 16 bis 18, **dadurch gekennzeichnet, dass** das Material (701) Formgedächtniseigenschaften aufweist.

24. Vorrichtung nach einem der Ansprüche 16 bis 18, **dadurch gekennzeichnet, dass** das Material sich ausdehnt.

25. Vorrichtung nach Anspruch 24, **dadurch gekennzeichnet, dass** das Material aufquillt oder aufschäumt und **dadurch** den Durchströmungsquerschnitt verstopft.

26. Vorrichtung nach den Ansprüchen 17 und 18, **dadurch gekennzeichnet, dass** eine Vorspanneinrichtung (1103) in Längsrichtung des Reaktionsrohrs (2) eine Druckvorspannung auf das Teil (1101) aufbringt und das Teil (1101) aus einem Material gebildet ist, das bei Erreichen der Grenztemperatur zäh erweicht und sich infolge der Druckvorspannung verformt.

27. Vorrichtung nach Anspruch 26, **dadurch gekennzeichnet, dass** das Teil (1101) das Reaktionsrohr (2) quer zu dessen Längsrichtung im wesentlichen ausfüllt und gasdurchlässig ist.

28. Vorrichtung nach Anspruch 26 oder 27, **dadurch gekennzeichnet, dass** das Teil (1101) aus Glas gebildet ist.

29. Vorrichtung nach einem der Ansprüche 26 bis 28, **dadurch gekennzeichnet, dass** die Vorspanneinrichtung eine Feder (1103) ist.

30. Vorrichtung nach einem der Ansprüche 10 bis 29, **dadurch gekennzeichnet, dass** sie auch als Katalysatorhalterung dient.

31. Vorrichtung nach einem der Ansprüche 10 bis 30, **dadurch gekennzeichnet, dass** sie mindestens zwei der Merkmale gemäß den Ansprüchen 10 bis 29 aufweist.

32. Reaktionsrohr für einen Rohrbündelreaktor für exotherme Gasphasenreaktionen, mit einer Vorrichtung nach einem der Ansprüche 10 bis 31.

33. Reaktionsrohr nach Anspruch 32, mit einer Füllung (6) aus Katalysatorpartikeln (4), wobei zumindest die auf Wärme ansprechenden Teile der Vorrichtung in die Füllung (6) eingebettet und die Bewegungsräume bewegbarer Teile frei von Katalysatorpartikeln (4) sind.

34. Reaktionsrohr für einen Rohrbündelreaktor für exotherme Gasphasenreaktionen, der ein Rohrbündel mit katalysatorgefüllten Reaktionsrohren (2) aufweist, deren eine Enden von einer Gaseintrittshaube und deren andere Enden von einer Gasaustrittshaube überspannt und die zur Abführung der Reaktionswärme an ihrer Außenseite von einem Wärmeträger umströmt werden, und der nach einem Verfahren gemäß den Ansprüchen 8 oder 9 betrieben wird, mit einer Füllung, die Flüssigkeiten und/oder Feststoffe enthält, die bei Erreichen der Grenztemperatur verdampfen und den Gasstrom inertisieren und/oder zusätzlich kühlen.

35. Rohrbündelreaktor für exotherme Gasphasenreaktionen, wobei das Rohrbündel Reaktionsrohre (2) nach einem der Ansprüche 32 bis 34 aufweist.

36. Verwendung eines Rohrbündelreaktors nach Anspruch 35 zur Herstellung von Maleinsäureanhydrid, Phthalsäureanhydrid, (Meth)acrolein, (Meth)acrylsäure, Methyl(meth)acrylat, Acrylnitril und Essigsäure.
